# EUROPEAN PATENT SPECIFICATION

(11) **EP 1 363 452 B1**
(45) Date of publication and mention of the grant of the patent: **15.06.2005**
(21) Application number: 03007365.4
(22) Date of filing: 01.04.2003
(51) Int. Cl.: H04N 5/76

(54) **Video recording according to an updated event schedule**
Videoaufzeichnung entsprechend einer aktualisierten Programmvorschau
Enregistrement vidéo selon des événements actualisés

(30) Priority: 14.05.2002 US 146628
(43) Date of publication of application: 19.11.2003
(73) Proprietor: MICROSOFT CORPORATION, Redmond, Washington 98052-6399 (US)
(72) Inventor: Horowitz, Steven, Los Altos, California 94024 (US); Potrebic, Peter J., Calistoga, California 94515 (US); Taylor, Thomas H., Redmond, Washington 98053 (US); Scott III, Samuel Thomas, Los Gatos, California 95030 (US)
(74) Representative: Grünecker, Kinkeldey, Stockmair & Schwanhäusser Anwaltssozietät

(56) References cited:
- EP-A- 0 940 983
- WO-A-02/19691
- PATENT ABSTRACTS OF JAPAN vol. 017, no. 366 (P-1571), 9 July 1993 (1993-07-09) & JP 05 054466 A (NEC ENG LTD), 5 March 1993 (1993-03-05)
- PATENT ABSTRACTS OF JAPAN vol. 2002, no. 03, 3 April 2002 (2002-04-03) & JP 2001 326865 A (FUJITSU LTD), 22 November 2001 (2001-11-22)
- PATENT ABSTRACTS OF JAPAN vol. 2000, no. 13, 5 February 2001 (2001-02-05) & JP 2000 278623 A (MATSUSHITA ELECTRIC IND CO LTD), 6 October 2000 (2000-10-06)
- PATENT ABSTRACTS OF JAPAN vol. 2000, no. 05, 14 September 2000 (2000-09-14) & JP 2000 050215 A (TOSHIBA CORP;TOSHIBA AVE KK), 18 February 2000 (2000-02-18)

## Description

### TECHNICAL FIELD

The present invention relates to recording channels included in programming content. More particularly, the present invention relates to recording programs broadcast on channels by requesting and receiving actual starting and ending times of the programs to ensure that the entire program is recorded.

### BACKGROUND

Client devices in a television-based entertainment system include set top boxes such as cable boxes, satellite receivers, and video cassette recorders (VCRs). Some client devices have recording capabilities and can be set-up to record a television program on a future date beginning at a starting time for a particular duration. The future date, starting time, and duration information for the television program can be obtained from a periodical such as the TV Guide® magazine or from the television programming schedule listing in a daily newspaper. Some client devices receive this information from a network broadcast of programming guide data, which is often referred to as an Electronic Programming Guide (EPG). The EPG is typically continually supplied to the client device and includes information that relates to the programming content that will be broadcast in the future. More specifically, the guide data contains information that indicates, in advance, the starting time and ending time of the programs that are described by the guide data. For example, a viewer may program the client device to record a program that begins at 8:00 P.M. one week ahead of time. With this information, the client device is able to start recording the program as the program is present on the selected channel at the viewer programmed date and time. The client device will stop recording after the duration indicated by the viewer has expired. As a result, the viewer is only ensured of recording the program that is on the selected channel on the date during the period from the starting time through the ending time as was programmed by the viewer.

The actual date, time and duration that a program airs on a particular channel of a broadcast network may vary from its announced broadcast schedule. In fact, there are many situations or events where the program that the viewer selected to record will not be recorded in its entirety. One such cause is a breaking news story. Breaking news stories simply interrupt the current program and can last for several minutes. After the breaking news story has been reported, regular programming will resume. Unfortunately, the interrupted program will not terminate at the designated time. Client devices are thus unable to account for this type of event and as a result, some of the program will not be recorded for the viewer.

Another common reason for not recording the entire program is related to the actual start and end times of a program. Often, the time clock on the client device will not coincide with the clock of the program provider. Alternatively, the broadcast of the program will not begin at the designated start time, but will begin either earlier or later than the designated start time. In these and other similar cases, the client device may begin recording after the program has already started or may stop recording before the program has actually ended. As a result, a viewer will not have the opportunity to view those portions of the program that were not recorded.

Another situation where the program may not fully record is related to sports programming. When a viewer is viewing the EPG or looking in the newspaper, a sports event is typically scheduled for a certain block of time. Baseball games, for example, are often scheduled for three or four hours. Setting the client device to record the sporting event for the scheduled time period does not ensure that the program will be fully recorded. Baseball games, for example, often have extra innings or are delayed because of rain. In these instances, the end of the sporting event may not be recorded and the viewer is deprived of watching the end of the event.

One solution to these types of problems is to cause the client device to begin recording prior to the time selected to by the viewer. For example, beginning to record approximately one minute before the start time of the program will account for situations where the program starts a few seconds before the designated time. With regard to the termination of the program, the client device may continue recording beyond the designated end time in an attempt to ensure that the entire program is recorded. For example, ending the recording approximately one and a half minutes after the end time of the program will account for some situations where the program extends beyond the designated end time.

This solution may cause the entire program to be recorded in some instances, but does not account for breaking news events or for other situations where the program delay or program interruption is more than a few minutes. In addition, other problems can arise with this solution because there is a possibility of conflict when the viewer desires to record more than one program. The potential for conflict is greatest when the programs being recorded are on different channels and the start time of one of the programs coincides with the end time of another of the programs. In this case, a decision must be made regarding when to terminate recording the first program and begin recording the second program. It is possible, in this scenario, to fail to record both the end of the first program and the beginning of the second program.

Another solution is to permit the viewer to manually extend the duration of the recording. Thus, the viewer can fully record a sports program that lasts much longer than expected. The obvious drawback is that the viewer must be present at some point to cause the recording to be extended. Another drawback is that extending the duration of the recording may eventually create a conflict with another program that is scheduled to be recorded. In addition, these solutions do not account for the problems that arise when the regular programming is delayed by a news bulletin or other interruption. Moreover, some client devices have limited recording capacity that will not bear a significant duration extension selected by the viewer for the recording. A client device may have a relatively large recording capacity that is, however, mostly full of recordings. In this case, some of the previous recordings would have to be deleted in order to make room to extend the current recording being made. Thus, it would be an advance in the art to further the objective of recording an announced program in its actual entirety given the forgoing constraints. Consequently, there is a need for improved methods, client devices, digital video recorders, computer programs, and systems that can provide such a capability.

WO-02/19691-A relates to digital video recording systems providing the capability of concurrently recording incoming broadcast audiovisual data using hard disk drive technology and playing back previously-recorded audiovisual data. A digital video recording system receives incoming broadcast audiovisual data from the output interface of a set-top box configured to receive the broadcast audiovisual data from a service provider, such as a cable or satellite television system. Set-top boxes are configured to receive electronic program guide (EPG) information from the service provider to provide broadcast scheduling information to the user. EPG information typically includes the title and broadcast times for the scheduled broadcast programs on each channel for a span of days. The digital video recording system can include an internal modem that is connected to a telephone line in order to make periodic, e.g., daily, phone calls to an affiliated provider to receive updated EPG information, which is then stored on an internal hard disk drive and used to provide broadcast scheduling information at later times. In response to a digital video recorder (DVR) user input and the EPG information, the DVR microprocessor signals the video data stream manager to control the recording of broadcast audiovisual data from the recorder interface and the playback of previously-recorded audiovisual data from the storage device. An EPG subsystem comprises an EPG processor, an EPG manager, and an EPG storage buffer. The EPG manager accesses the EPG information stored in the EPG storage buffer in response to commands from the DVR microprocessor, and makes requested EPG information available to the DVR microprocessor. The DVR microprocessor utilizes the EPG information to provide the user with broadcast scheduling information. A set-top box (STB) microprocessor continually monitors the EPG information received by a video input interface and stores a portion of the EPG information in RAM resident with the STB microprocessor. When the STB microprocessor detects that new or updated EPG information has been received, the STB microprocessor stores the new or updated EPG information in resident RAM, and sends a "new EPG data available" message to the EPG processor, which responds by retuming an "acknowledge response" message. After the EPG processor has been informed that there is new or updated EPG information available, the EPG processor can request that the new or updated EPG information be sent by the STB microprocessor to the EPG processor by sending an "EPG data request" message to the STB microprocessor. The STB microprocessor responds by sending an "EPG data response" message which contains the requested new or updated EPG information. This updating of the EPG information is used by the digital video recorder.

JP-05054466-A deals with recording a desired program even when a program schedule is changed at the time of reserving video recording with a VTR. A CPU having a schedule control function is built into the VTR and a computer updating the program schedule is installed in a center. The CPU sends an inquiry about the presence of changing in the program schedule automatically and receives a response from the computer, then changes the reserving video recording time in the VTR automatically.

### SUMMARY

It is the object of the present invention to allow for recording a program in its entirety. This object is solved by the invention as defined in the independent claims. Embodiments are given in the dependent claims.

Methods, client devices, digital video recorders, computer programs, and systems for recording a program in its entirety are described. In the described implementation, a request is made for an updated event schedule corresponding to a video broadcast on a broadcast address of a broadcast network. The updated event schedule is received. A recording is made, according to the updated event schedule, of the video broadcast received from the broadcast address of the broadcast network.

### BRIEF DESCRIPTION OF THE DRAWINGS

Figure 1 illustrates, in a front elevation view, an exemplary environment in which a client device has received input including a section of an electronic program guide (EPG) which is displayed upon a television, where the television displays choices to the viewer of television programming content, each being selectable by the viewer for viewing on the television and/or recording with the client device.

Figure 2 shows the client device and television of Figure 1, the latter displaying a diagnostic illustrative of a determination of a potential conflict in recording selections made by the viewer.

Figure 3 is a flow diagram that illustrates a procedure for issuance of a diagnostic, for example, as illustrated in Figure 2.

Figure 4 shows the client device and television of Figures 1 and 2, the latter displaying original EPG and actual event schedules for the recording selections made by the viewer as seen in Figure 2.

Figure 5 is a flow diagram that illustrates a procedure for requesting and receiving, at various times, an actual event schedule for a recording selection.

Figure 6 illustrates an exemplary environment in which the systems, methods, and computer programs described herein may be implemented.

Figure 7 illustrates of an example client device, a television, and various input devices that interact with the client device.

Figure 8 is a block diagram that illustrates components of the example client device(s) shown in Figures 1, 2, 4, 6, and 7.

### DETAILED DESCRIPTION

An entertainment architecture enables recording of programs in their entirety, even if the shows are disrupted or off-schedule for some reason and might conflict with another program to be recorded. The entertainment architecture includes a client device having a memory that is coupled to a processor. An electronic program guide (EPG), a recording application, and a transmission application are maintained in the memory. The applications are executed on the processor. The recording application is configured, when executed on the processor, to receive a request to record a program recognized by the EPG. The request corresponds to program data that includes a broadcast channel, a program title, a start time, and a duration as contained in the EPG. The request creates a program event to record the program. The program event, or video broadcast event, includes the program data. The transmission application is configured to request and receive an updated event schedule having program data corresponding to the program data of the request to record the program. A video recorder is included in the client device and is configured to record a video broadcast from the broadcast channel according to the updated event schedule. In requesting and receiving the updated event schedule, the client device conducts two-way communication with one or more EPG update service providers. In one implementation, it might not be necessary for two-way communication. For example, a signal from a content provider broadcasting by satellite might simply include a list of shows that are going "over time". Every client device could in turn simply passively receive the stream in the signal from the satellite that contained the list of TV showing there were "going overtime" and then react accordingly.

The client device can determine from the EPG whether chronologically adjacent programs that are to be recorded are likely to vary into a conflict with respect to the respective start and duration times as indicated in the EPG. Such a conflict arises when two chronologically adjacent programs are scheduled to be recorded, where one program has a likely stop time that extends past the start time of the other program. Upon such determination, a diagnostic can be used to warn the viewer. When an actual conflict arises as determined from the updated event schedule obtained by the client device from the one or more EPG update service providers, the client device skips the recording all or the beginning of the chronologically last program, stops recording the chronologically first program when the next program begins, or a variation thereof as dependant upon the configuration of the client device.

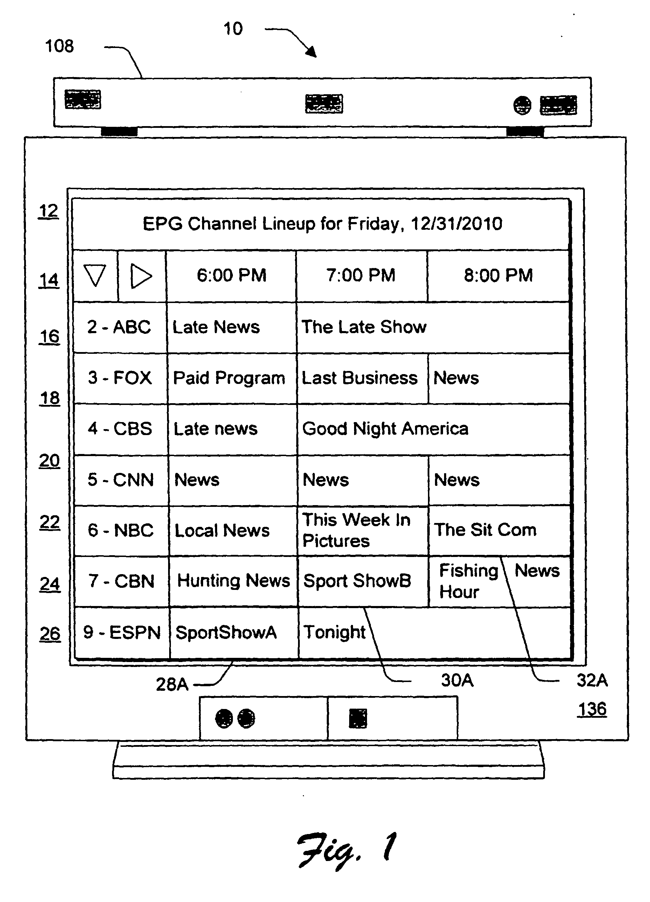

With reference to Figure 1, an exemplary system 10 for implementing the entertainment architecture includes a client device 108 in communication with a television 136. Television 136 has display lines 12 through 26 where there is displayed an example of a program guide showing part of a channel programming lineup for Friday, December 31, 2010. The program guide is generated with an electronic program guide (EPG) application in client device 108 with program data, where part of the program data is displayed on television 136. The program guide provides a viewer with a program title, the associated local channel number and/or television broadcasting company that will broadcast the program, and a time of the day that the program will be broadcast.

The program guide assists a viewer to identify and select a program title that the viewer wished to view or record if the program is currently being broadcast, access program data to learn more about the program, and/or enter a request to record the program if the program is to air in the future. A viewer can move within the program guide, using an input device such as a remote control apparatus, to input control commands to client device 108.

In display line 12, an explanation for the display on television 136 is given that the display shows a portion of the EPG channel lineup for the date Friday, December 31, 2010. Display line 14, in the first column thereof, shows scrollable user interface icons. The first icon indicates that a viewer can scroll vertically to show various channels for the 6:00 P.M. to 9:00 P.M. time period. The second icon indicates that the viewer can scan chronologically forward and backwards for each of the displayed channels 2 through 9. The second, third and fourth columns indicate the timeslots 6 P.M., 7 P.M., and 8 P.M. Display line 16 shows the lineup for channel 2, the "ABC" television broadcast network. As seen in the second column of display line 16 two programs are indicated, namely the Late News at 6 P.M. and the Late Show at 7 P.M. Reference numeral 28a in Figure 1 indicates that Sport Show A begins at 6 P.M. and continues until 7 P.M. on channel 9 on the ESPN television broadcast network. Reference numeral 30A indicates that the Sport Show B begins at 7:00 P.M. and continues until 8:00 P.M. on channel 7 of the CBN network as indicated in display line 24 of television 136. Reference numeral 32A is seen in display line 22 of Figure 1 and indicates that the television program "The Sit Com" begins at 8 P.M. and continues until 9 P.M. on Friday, December 31, 2010. The display seen in Figure 1 is for original EPG data that can be given in advance of the date of Friday, December 31, 2010. Information given is the best that is available at the time from an EPG service. It should be noted, however, that this information is subject to change. Moreover, certain television programs tend to run over their originally announced times, which is specifically the case for television programs that are live events, sporting events that are not timed or otherwise are of indeterminate duration, as well as some programs that are not repeated or rerun.

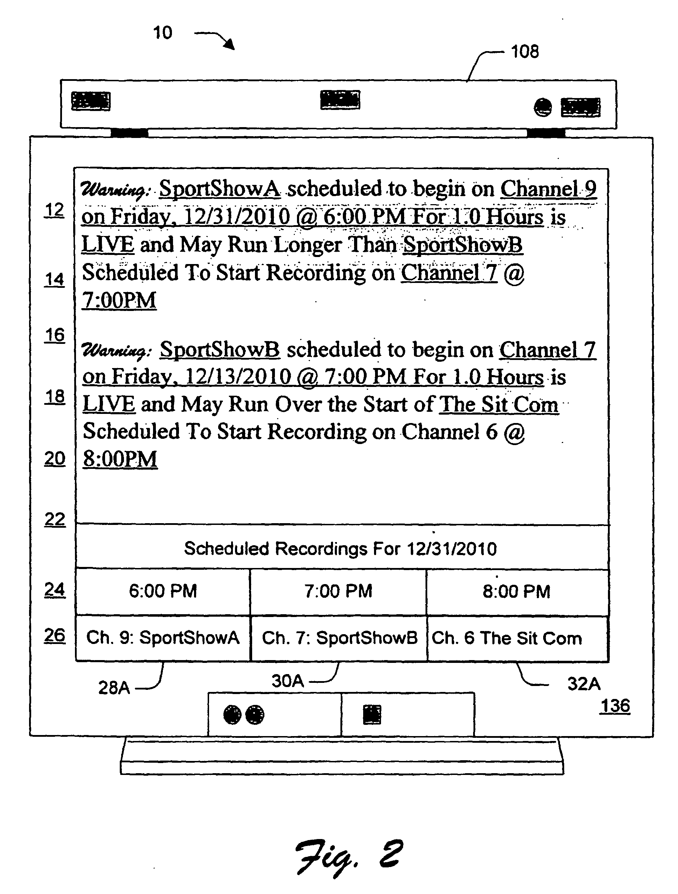

Although the original EPG does not reflect a scheduling conflict for programs that a viewer requested to be recorded, such conflicts may occur. Figure 2 shows the results of a determination that the program listed for recording in display lines 24-26 are likely to vary from the displayed time slots. Specifically, display lines 24-26 indicate that the Sport Show A is scheduled, according to the EPG, to begin at 6 P.M. on channel 9 on Friday, December 31, 2010, and is to continue for one hour. As such, a diagnostic seen in display lines 12-15 indicates that the Sport Show A is likely to run longer than 7 P.M., the originally scheduled stop time. The likelihood of a scheduling conflict between programs to be record can be determined by client device 108 using the EPG in a variety of ways, including the use of heuristic techniques. For instance, if the EPG indicates that Sport Show A is a live program, client device 108 can instigate a viewer warning via the diagnostic in display lines 12-15 informing the viewer that the requested recordings are likely not to be properly recorded as currently scheduled in the EPG. This determination can be made up front and probabilistically as seen in this display. This determination can also be made by client device 108 at the time that the programs are demanded to be recorded by a viewer. For instance, client device 108 can request and receive any changes to the originally scheduled broadcasts of each program from an EPG update service that is contacted at the time of the viewer's demand for recordings to see if the programs have scheduling conflicts not originally existing in the originally announced EPG schedule.

Similar to display line 12-15, display lines 16-20 indicate a similar problem with respect to Sport Show B which was originally scheduled for display on channel 7 for one hour beginning at 7 pm. Accordingly, there is a conflict with The Sit Com which is to begin recording at 8 pm. As such, it is likely that Sport Show B will run overtime and into the scheduled recording on channel 6 of The Sit Com at 8 pm. Display lines 22-26 on display screen of television 136 shows the original EPG data so that the viewer can see the conflicts having a potential to arise due to their demanded recording schedule. The viewer can also be prompted to act, such as to change and/or confirm their demands, based upon the diagnostic.

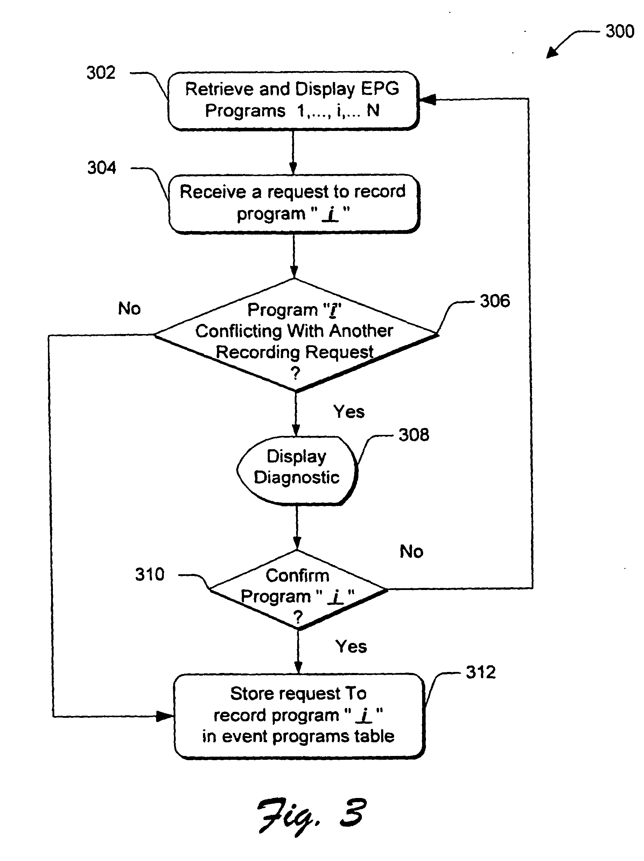

Figure 3 shows a method for identifying potential recording schedule conflicts. The order in which the method is described is not intended to be construed as a limitation, and any number of the described method blocks can be combined in any order to implement the method. Furthermore, the method can be implemented in any suitable hardware, software, firmware, or combination thereof.

A process 300 is seen in Figure 3 which can be used, for example, with respect to environment 10 depicted in Figure 2. Process 300 can begin at block 304 where EPG data is retrieved by a client device and displayed on a television monitor for various programs (e.g. programs 1-N). Process 300 then moves to block 304 where a viewer requests that a certain program (*i*) be recorded by the client device. At block 306, it is determined whether program (*i*) will conflict with any previously requested program that is to be recorded. The query conducted at block 306 can be determined based on EPG data. For instance, if a live program is scheduled to immediately precede another scheduled program, it is likely that the live program will run longer than it's originally scheduled duration or stopping time. The conflict is predicted, in this example, when a chronologically adjacent program is scheduled to start at or proximal to the same time that the live program is scheduled to stop. In such case, process 300 moves to block 306 where a diagnostic is displayed to a viewer. Such a diagnostic, by way of example and not by way of limitation, is seen in Figure 2 at display lines 12-15 and also at display lines 16-20.

At block 310, the viewer can confirm the potentially conflicting recording schedule, or the viewer can change the recording schedule to remove any potential for a recording schedule conflict. In the event that the viewer chooses not to confirm the requested recording schedule, then process 300 moves to block 302 to allow the viewer to review other EPG data for selection of recordings. If the viewer does confirm the requested program for recording, despite the diagnostics that are displayed, then process 300 moves to block 312 where the request to record the program is stored in an event programs table. At block 306, if no program is determine to conflict or overlap between chronologically adjacent programs, as might be determined by a client device, then process 300 moves immediately to block 312 for storage of the program identified to be recorded in the event program table.

An EPG update service can be made available to a client device that updates EPG data stored in the client device. This updating can be performed on a real-time basis for television programs as they are being scheduled for broadcast on a broadcast network. The update can take place at any time before, after, or during the airing of a television program on a channel of a broadcast network. The EPG update service can be provided to the client device through a two-way network. Any one of many subscriber client devices can obtain updates from an EPG update service by a request submitted to the EPG update service through a two-way network. The two-way network is then used to communicate the requested update back to the requesting client device from one or more EPG update service providers. In practice, a client device would issue a request for an update of any program event that the client device is scheduled to record. This request can be made a sufficient time before the beginning of the originally scheduled time for the program event, immediately at the time that the program is scheduled to begin, during the program event while the recording is proceeding, a sufficient time prior to the scheduled end of the programming event, or immediately at the same time of the originally scheduled end of the program event. As such, the client device can be updated, on a real time basis, as to any and all aspects of a recording function for a program that is scheduled to be recorded. In this way, the client device need not record any more that the precise amount of the actual broadcast program as determined from one of more EPG update service providers.

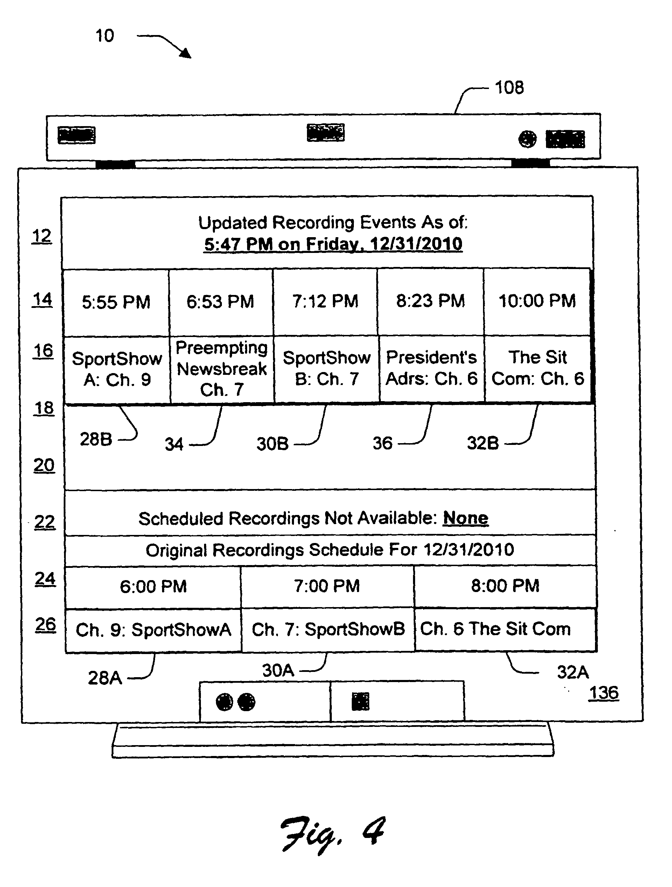

As seen in Figure 4, television 136 receives a display output from client device 108 in system environment 10. Display lines 14-18 reflect accurate EPG data as received by client device 108 from an EPG update service provider. This information is shown in display line 12 as being current as of 5:47 pm on Friday, December 31, 2010. Display lines 24-26 show the viewer's originally requested programs and their respective originally scheduled event time for December 31, 2010. The displayed original start and stop times with respect to reference numerals 28A, 30A, and 32A in display lines 24-26 of Figure 4 correspond to like reference numerals in Figures 1 and 2. Display lines 14-18 on television 136 indicate the actual broadcast times for channels 9, 7 and 6 on respective broadcasting networks as received by client device 108 from one or more EPG update service providers. As can be seen in reference numerals 28A and 28B, Sport Show A which was originally scheduled to begin at 6 P.M. will actually begin 5 minutes earlier at 5:55 P.M. As seen in reference numeral 34, a preempting news break is scheduled on channel 7 at 6:53 P.M. Thus, the program seen at reference numeral 34 is conflicting with the program seen at reference numeral 30A. At reference numeral 30A, Sport Show B was originally scheduled to begin at 7:00 P.M. on channel 7. The program at reference numeral 34, however, will continue until 7:12 pm on channel 7. As such, Sport Show B on channel 7 will not actually begin until 7:12 P.M.

At reference numeral 32A, The Sit Com is scheduled to begin originally at 8 pm at channel 6. As seen at reference numeral 36, a presidential address is scheduled at channel 6 at 8:23 pm. Moreover, reference numeral 32B indicates that the actual starting time for The Sit Com on channel 6 is 10 pm and will run until 11 pm. The information received by client device 108 can be communicated to update the actual times for recording on client device 108. As such, display lines 14-18 will be updated as to data respective thereto in client device 108. The updated recording information will be used to make recordings of Sport Show A, Sport Show B, and The Sit Com as they are actually broadcast.

The EPG data updates described with respect to Figure 4 can be performed prior to, at the start of, during, and/or at the end of the originally schedule recording time. In the event that client device 108 has a real time continuous connection to one or more EPG update service providers, then any number of updates can be made to with respect to the recording that the client device is to make. Alternatively, updates to the actual recording schedule can be made on a more granular basis so as to reduce network traffic on the two way network between the EPG update service provider(s) and client device 108. For instance, the query to update a recording schedule might be made 15 minutes prior to an originally scheduled start time of a program that is to be recorded, and then again just at the beginning of the program. Alternatively, the request for an update might be made 15 minutes prior to the originally scheduled beginning of the program. Similarly, the query to the EPG update service might be made 15 minutes prior to the end of the originally scheduled program. In the event that it is determined from the EPG update service that the program will run overtime, and that the extent of the overrun is not yet known, the client device 108 might be configured to extend the recording time for a predetermined threshold, such as 15 minutes, 30 minutes, or an hour, etc. In this way, repeated updates to the EPG update service provider need not be made but rather the recording be made based on a "best guess" basis of the predetermined threshold.

In the event that an EPG update service provides updated scheduling information about programs to be recorded that cause conflicts between those programs that are chronologically adjacent, then a predetermined algorithm can be implemented in client device 108 so as to decide which programs to record in any such a conflict situation. Such an algorithm may omit a recording demand in the conflict situation, or it may use other criteria for deciding what is to be recorded. By way of example, and not by way of limitation, the algorithm may deem that a program that is presently being recorded, and that has been determined to be running overtime, will take precedence over any recording of a subsequent program that was also scheduled to be recorded. Alternatively, it might be determined that a live program will take precedence in recording over a program to be recorded that is recognized as being a rerun. Another alternative would be an algorithm that gives precedence to any program recognized by the client device to be a sporting event that is determined to conflict with the recording of a program that is not a sporting event. Any number of algorithms can be used to determine which conflicting programs are to be recorded and which conflicting programs are to be terminated from recording in their entirety, or are not recorded altogether.

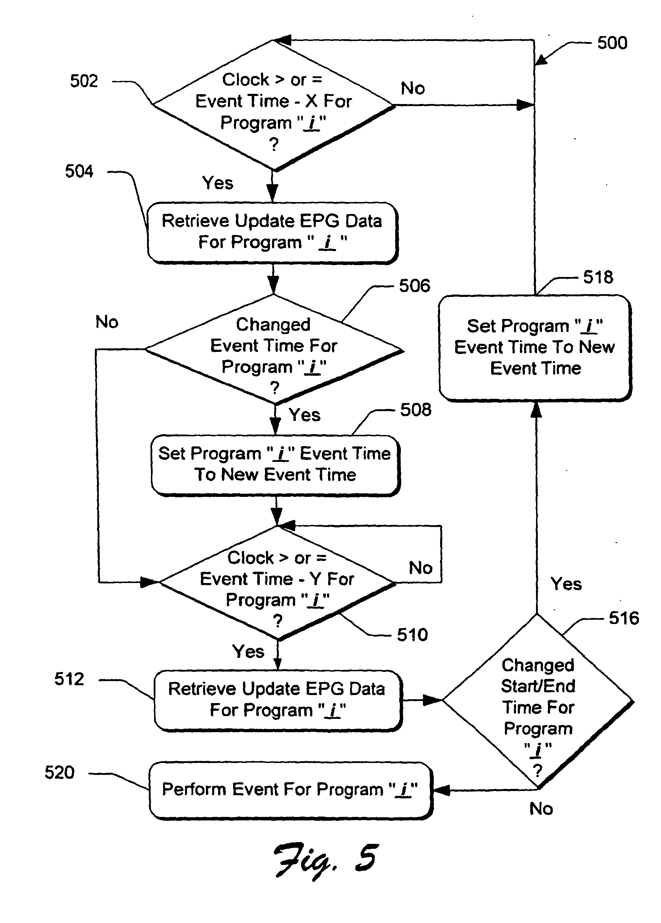

Figure 5 shows a method for updating a date, a start time, and a stop time for a television program that is scheduled to be recorded by a client device. The method, according to an implementation, can be used to update original start, stop and duration times that were obtained by the client device from original EPG data, or from another source such as a viewer's own knowledge. The order in which the method is described is not intended to be construed as a limitation, and any number of the described method blocks can be combined in any order to implement the method. Furthermore, the method can be implemented in any suitable hardware, software, firmware, or combination thereof.

A process 500 seen in Figure 5 obtains update information from one or more EPG update service providers, any one of which can be located at an address on a two-way network with which the client device is also in communication. In Figure 5, an "event time" can be, for a program that is scheduled to be recorded, a start time, a stop time, or duration of the program. At block 502, process 500 presents a query as to whether the system clock of the client device is greater than or equal to the event time minus a threshold "X" for a program "I". By way of example, the threshold X can be 15 minutes prior to the scheduled start or stop of a program that is scheduled to be recorded. In the event that the clock time is less than the event time minus X then process 500 returns to block 502 and counting continues until the clock time is the same time as the event time minus the threshold X or greater than. In such case, process 500 moves to block 504 where the recording schedule for the program is updated by a successive query to and receipt from one or more EPG update services via communications through a two-way intercommunicating network.

Once the EPG update information has been received, process 500 proceeds to the query at block 506. The query at block 506 asks whether or not a change has been made to the recording schedule of the program scheduled to be recorded. Such a change can be made to the scheduled start time, stop time, or to the duration, depending how the data is supplied from the EPG update service. In the event that a change is determined to have been made, then process 500 proceeds to block 508 where the information stored about the program to be recorded is updated with the new information. In the event there has been no change, then process 500 moves to block 510, which also follows block 508.

At block 510 another threshold is taken with respect to the clock of the client device. This threshold can be closer to the actual event time of the program to be recorded. For example, the threshold Y of block 510 can be smaller than the threshold X in block 502 such that the query is made to the EPG update service immediately prior to the beginning or the end of the scheduled program that is to be recorded. This query at block 510 loops until the clock time is less than or equal to the event time minus the threshold Y, at which time process 500 proceeds to block 512 where the EPG update service is again queried and a response therefrom received. Any change in the recording schedule is ascertained in the query at block 516. If there has been no change, then the program begins or stops recording at block 520 as per the information stored with respect to that programmed event. If, however, block 516 determines from the query that there has been a change to the start/end/duration time for the program event, then process 500 continues to block 518 where the program event is updated as to the newly acquired EPG update information. Process 500 moves from block 518 to block 502 for a repetition of the foregoing. In the repetition of process 500, threshold time X and Y can be set so as to be significantly separated from the scheduled start and/or stop times of a program, or so as to be immediately proximal to the start and/or stop times of the program.

As can be seen from the flow of process 500, the time period for which a program is scheduled to be recorded can be moved repeatedly by one or more EPG update service providers such that the recording process for the client device doesn't begin until a time period that is quite difference from the originally scheduled time period. In this way, the client device need not record any more than the actual program as it is broadcast on a channel of a broadcast network. Given that the amount of time that is available for storage in the client device might be somewhat limited, making the recording of the scheduled program somewhat precisely as it is broadcast, and just in time to the actual beginning and ending of its airing, presents an efficient use of the storage available in client device. Moreover, safeguards can be provided to the client device such that programs can be selected as to their priority for recording in the event that conflicts occur between chronologically adjacent, actually broadcast programs that are to be recorded.

The discussion above is directed to television-based entertainment systems, such as interactive TV networks, cable networks that utilize electronic program guides, and Web-enabled TV networks. Client devices in such systems range from full-resource clients with substantial memory and processing resources, such as TV-enabled personal computers and TV recorders equipped with hard-disks, to low-resource clients with limited memory and/or processing resources, such as traditional set-top boxes and clients that record programs on video tape. While aspects of the described methods and computer programs can be used in any of these systems and for any types of client devices, they are described in the context of the following exemplary environment.

### Exemplary Environment

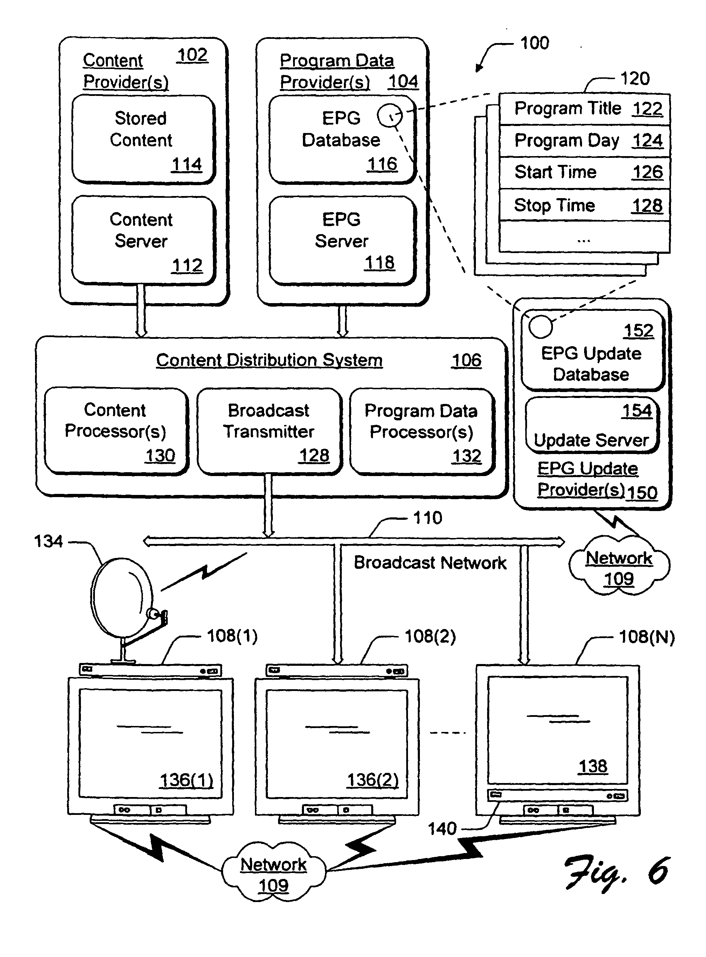

Figure 6 illustrates an exemplary environment 100 in which the methods, computer programs, and systems described herein may be implemented. Exemplary environment 100 is a television entertainment system that facilitates distribution of content and program data to multiple viewers. The environment 100 includes one or more content providers 102, one or more program data providers 104, a content distribution system 106, one or more Electronic Programming Guide (EPG) Update Providers 150, and multiple client devices 108(1), 108(2), ..., 108(N) coupled to the content distribution system 106 via a broadcast network 110.

Content provider 102 includes a content server 112 and stored content 114, such as movies, television programs, commercials, music, and similar audio and/or video content. Content server 112 controls distribution of the stored content 114 from content provider 102 to the content distribution system 106. Additionally, content server 102 controls distribution of live content (e.g., content that was not previously stored, such as live feeds) and/or content stored at other locations to the content distribution system 106.

Program data provider 104 includes an electronic program guide (EPG) database 116 and an EPG server 118. The EPG database 116 stores electronic files of program data 120 which is used to generate an electronic program guide (or, "program guide"). Program data includes program titles, ratings, characters, descriptions, actor names, station identifiers, channel identifiers, schedule information, and so on. The terms "program data" and "EPG data" are used interchangeably throughout this discussion. For discussion purposes, an electronic file maintains program data 120 that may include a program title 122, a program day or days 124 to identify which days of the week the program will be shown, and a start time or times 126 to identify the time that the program will be shown on the particular day or days of the week.

The EPG server 118 processes the EPG data prior to distribution to generate a published version of the program data which contains programming information for all channels for one or more days. The processing may involve any number of techniques to reduce, modify, or enhance the EPG data. Such processes might include selection of content, content compression, format modification, and the like. The EPG server 118 controls distribution of the published version of the program data from program data provider 104 to the content distribution system 106 using, for example, a file transfer protocol (FTP) over a TCP/IP network (e.g., Internet, UNIX, etc.). Further, the published version of the program data can be transmitted from program data provider 102 via a satellite 134 directly to a client device 108 by use of a satellite dish 134.

Content distribution system 106 includes a broadcast transmitter 128, one or more content processors 130, and one or more program data processors 132. Broadcast transmitter 128 broadcasts signals, such as cable television signals, across broadcast network 110. Broadcast network 110 can include a cable television network, RF, microwave, satellite, and/or data network, such as the Internet, and may also include wired or wireless media using any broadcast format or broadcast protocol. Additionally, broadcast network 110 can be any type of network, using any type of network topology and any network communication protocol, and can be represented or otherwise implemented as a combination of two or more networks.

Content processor 130 processes the content received from content provider 102 prior to transmitting the content across broadcast network 108. Similarly, program data processor 132 processes the program data received from program data provider 104 prior to transmitting the program data across broadcast network 110. A particular content processor 130 may encode, or otherwise process, the received content into a format that is understood by the multiple client devices 108(1), 108(2), ..., 108(N) coupled to broadcast network 110. Although Figure 6 shows a single content provider 102, a single program data provider 104, and a single content distribution system 106, exemplary environment 100 can include any number of content providers and/or program data providers coupled to any number of content distribution systems.

Content distribution system 106 is representative of a headend service that provides EPG data, as well as content, to multiple subscribers. Each content distribution system 104 may receive a slightly different version of the program data that takes into account different programming preferences and lineups. The EPG server 118 creates different versions of EPG data (e.g., different versions of a program guide) that include those channels of relevance to respective headend services, and the content distribution system 106 transmits the EPG data to the multiple client devices 108(1), 108(2), ..., 108(N). In one implementation, for example, content distribution system 106 utilizes a carousel file system to repeatedly broadcast the EPG data over an out-of-band (OOB) channel to the client devices 108.

Client devices 108 can be implemented in a number of ways. For example, a client device 108(1) receives broadcast content from a satellite-based transmitter via satellite dish 134. Client device 108(1) is also referred to as a set-top box or a satellite receiving device. Client device 108(1) is coupled to a television 136(1) for presenting the content received by the client device (e.g., audio data and video data), as well as a graphical user interface. A particular client device 108 can be coupled to any number of televisions 136 and/or similar devices that can be implemented to display or otherwise render content. Similarly, any number of client devices 108 can be coupled to a single television 136.

Client device 108(2) is also coupled to receive broadcast content from broadcast network 110 and provide the received content to associated television 136(2). Client device 108(N) is an example of a combination television 138 and integrated set-top box 140. In this example, the various components and functionality of the set-top box are incorporated into the television, rather than using two separate devices. The set-top box incorporated into the television may receive broadcast signals via a satellite dish (similar to satellite dish 134) and/or via broadcast network 110. In alternate implementations, client devices 108 may receive broadcast signals via network 109, such as the Internet, or any other broadcast medium.

Each client device 108 runs an electronic program guide (EPG) application that utilizes the program data. An EPG application enables a television viewer to navigate through an onscreen program guide and locate television shows of interest to the viewer. With an EPG application, the television viewer can look at schedules of current and future programming, set reminders for upcoming programs, and/or enter instructions to record one or more television shows.

Optionally, one or more of the program data providers 104 can include stored on-demand content, such as Video On-Demand (VOD) movie content. The stored on-demand content can be viewed with a client device 108 through an onscreen movie guide, for example, and a viewer can enter instructions to stream a particular movie, or other stored content, down to a corresponding client device 108.

Each client device 108 (1 through N) and the one or more EPG update providers 150 are in communication with a network 109 that provides two-way communications there between. EPG update provider(s) 150 includes an EPG update database 152 and an update server 154. Update server 154 serves EPG update data stored in EPG database 152 to any requesting client device 108 (1 through N). To request EPG update data on the two-way network 109, each client device 108 transmits a request to one or more of the EPG update providers 150. EPG update database 152 stores information that is categorically similar to that which is stored by program data providers 104 in EPG database 116. Each EPG event record 120 in EPG update database 152 may contain an amended or updated program day 124, an updated start time 128, an updated stop time 128, as well as any other data that may have changed with respect to program event record 120.

Each program event record 120 may include information that forms an indicator as to the type of program that is being scheduled to be aired. By way of example, the program record 120 may include an indicator that the program is a sports program, a live program, a delayed program, or that the program will not be rerun (e.g. a non-repeated program). A delayed program is a TV program that is a live event, but is scheduled to be broadcast by a delay of a certain amount of time from the actual live event (e.g. by a delay of an hour or so). By way of example, news coverage of a live Olympic sports event might not be "Live" per se, but is rather delayed by several hours and thus might well run overtime.

This information can be used to determine whether the program is likely to actually be aired at a time that differs from its announced original broadcast schedule. As such, this information can be used to warn a viewer wishing to record this program when any chronologically adjacent programs are likely to been conflict with the viewer's desired recording schedule.

### Exemplary Client Device

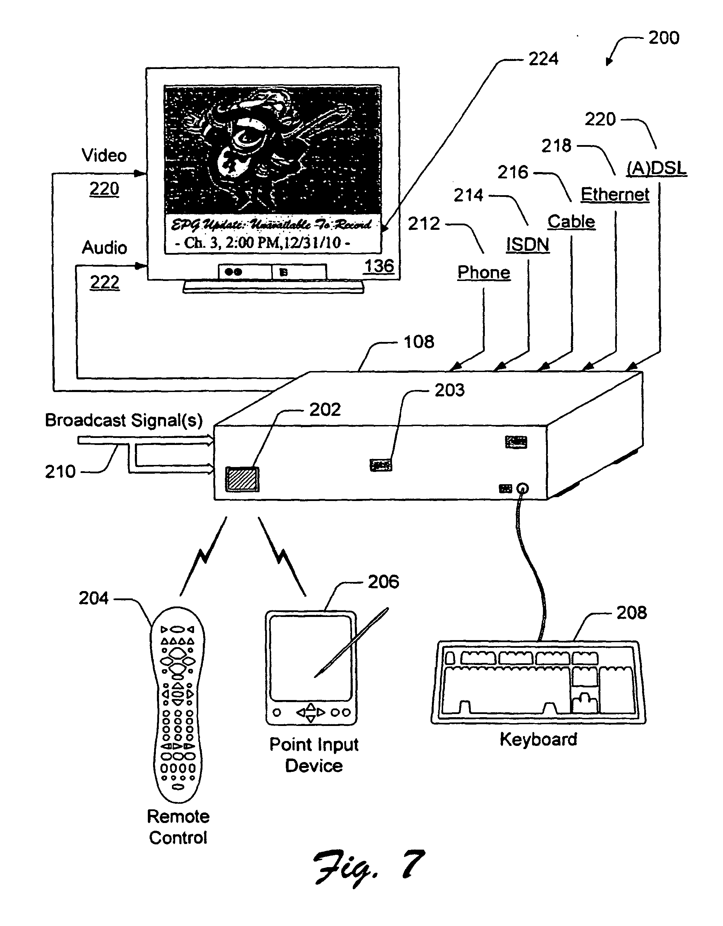

Figure 7 illustrates an exemplary implementation 200 of a client device 108 shown as a standalone unit that connects to a television 136. Client device 108 can be implemented in any number of embodiments, including as a set-top box, a satellite receiver, a TV recorder with a hard disk, a game console, an information appliance, and so forth. Client device 108 includes a wireless receiving port 202, such as an infrared (IR) or Bluetooth wireless port, for receiving wireless communications from a remote control device 204, a handheld input device 206, or any other wireless device, such as a wireless keyboard. Handheld input device 206 can be a personal digital assistant (PDA), handheld computer, wireless phone, or the like. Additionally, a wired keyboard 208 is coupled to communicate with the client device 108. In alternate embodiments, remote control device 204, handheld device 206, and/or keyboard 208 may use an RF communication link or other mode of transmission to communicate with client device 108.

Client device 108 receives one or more broadcast signals 210 from one or more broadcast sources, such as from a satellite or from a broadcast network. Client device 108 includes hardware and/or software for receiving and decoding broadcast signal 210, such as an NTSC, PAL, SECAM or other TV system video signal. Client device 108 also includes hardware and/or software for providing the viewer with a graphical user interface by which the viewer can, for example, access various network services, configure the client device 108, and perform other functions.

Client device 108 is capable of communicating with other devices via one or more connections including a conventional telephone link 212, an ISDN link 214, a cable link 216, an Ethernet link 218, an ADSL and/or DSL link 220, and the like. Client device 108 may use any one or more of the various communication links 212-220 at a particular instant to communicate with any number of other devices and/or to establish a two-way communication with one or more EPG update providers 150 seen in Figure 6.

Client device 108 generates video signal(s) 220 and audio signal(s) 222, both of which are communicated to television 136. The video signals and audio signals can be communicated from client device 108 to television 136 via an RF (radio frequency) link, S-video link, composite video link, component video link, or other communication link. At reference numeral 203 in Figure 7, client device 108 includes one or more lights or other indicators identifying the current status of the device or for diagnostic reports to a viewer. Additionally, the client device may include one or more control buttons, switches, or other selectable controls for controlling operation of the device.

In Figure7, television 136 shows display line 224 which informs the viewer that client device 108 has received a communication from an EPG update service that has been used to determine that a scheduled recording has been unable to be recorded. Display line 224 shows an example of how the updated EPG data can be used to inform a viewer that the program on channel 3 at 2:00 P.M. on December 31, 2010 was not available to be recorded. The reason for the displayed diagnostic could be varied, which may be due to an elimination of the airing of the program or due to a conflict with other programs that were scheduled to be recorded. Alternatively, the client device 108 may have been configured to give priority to the recording of another program such that the program on channel 3 at 2:00 P.M. cannot be recorded as per the viewer previously specified preferences. This diagnostic can be issued to the viewer for their own edification and/or so that the viewer may take any action that may be warranted. Additionally, a diagnostic visual and/or audible alarm device or mechanism at reference numeral 203 can emit a diagnostic representative of that which is displayed at display line 224. In the alternative, both display line 224 and an alarm with the diagnostic visual and/or audible alarm device or mechanism at reference numeral 203 can be used so that the viewer may be warned visually and/or audibly that the EPG update service has given information to client device 108 to the effect that a recording cannot be made or might not be made.

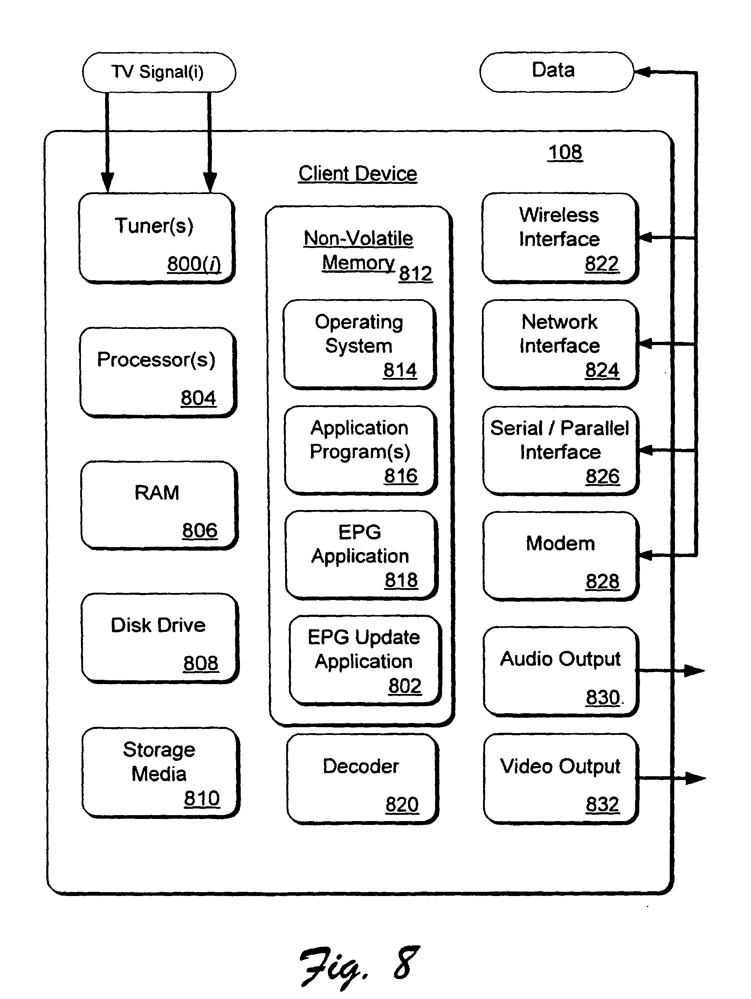

Figure 8 illustrates selected components of client device(s) 108 shown in Figures 1, 2, 4, 6, and 7. Client device 108 includes one or more tuners 800(*i*). Tuners 800(*i*) are representative of one or more in-band tuners that tune to various frequencies or channels to receive television signals, as well as an out-of-band tuner that tunes to the broadcast channel over which the EPG data is broadcast to client device 108.

Client device 108 also includes one or more processors 804 and one or more memory components. Examples of possible memory components include a random access memory (RAM) 806, a disk drive 808, a mass storage component 810, and a non-volatile memory 812 (e.g., ROM, Flash, EPROM, EEPROM, etc.). Alternative implementations of client device 108 can include a range of processing and memory capabilities, and may include more or fewer types of memory components than those illustrated in Figure 8. For example, full-resource clients can be implemented with substantial memory and processing resources, including a disk drive 808 to store content for replay by the viewer. Low-resource clients, however, may have limited processing and memory capabilities, such as a limited amount of RAM 806, no disk drive 808, and limited processing capabilities. Nevertheless it is intended that client device 108 include a capability for video recording, either locally or remotely from client device 108.

Processor(s) 804 process various instructions to control the operation of client device 108 and to communicate with other electronic and computing devices. The memory components (e.g., RAM 806, disk drive 808, storage media 810, and non-volatile memory 812) store various information and/or data such as content, EPG data, configuration information for client device 108, and/or graphical user interface information.

An operating system 814 and one or more application programs 816 may be stored in non-volatile memory 812 and executed on processor 804 to provide a runtime environment. A runtime environment facilitates extensibility of client device 108 by allowing various interfaces to be defined that, in turn, allow application programs 816 to interact with client device 108. In the illustrated example, an EPG application 818 is stored in memory 812 to operate on the EPG data and generate a program guide. The application programs 816 that may be implemented at client device 108 can include a browser to browse the Web, an email program to facilitate electronic mail, and so on.

Figure 8 shows non-volatile memory 812 having an EPG update application 802 which, when executed by processor(s) 804, initiates a query with a two-way network that requests updated EPG information with respect to a program from one or more EPG update service providers. The updates so provided can include any updated start time, end time, or duration for a program that is scheduled to be recorded by client device 108. These updates will be used to amend data that was originally obtained. The query executed by one or more processors 804 of EPG update application 802 retrieves the requested EPG update and then stores the updates in any location within any memory device of client device 108, such as in non-volatile memory 812, RAM 806, disk drive 808, and/or storage media 810. The communication on the two-way network to the one or more EPG update service providers is made using network interface 824, wireless interface 822, serial/parallel interface 826, modem 828, or other well known communication hardware/software algorithms and protocol for computing devices. By way of example, such communication can be architected similar to that seen in Figure 6 where two-way communications network 109 is coupled with client device 108 and with one or more EPG update providers 150.

Client device 108 can also include other components pertaining to a television entertainment system which are not illustrated in this example for simplicity purposes. For instance, client device 108 can include a user interface application and user interface lights, buttons, controls, etc. to facilitate viewer interaction with the device.

Client device 108 also includes a decoder 820 to decode a broadcast video signal, such as an NTSC, PAL, SECAM or other TV system video signal. Alternatively, a decoder for client device 108 can be implemented, in whole or in part, as a software application executed by ptocessor(s) 804. Client device 108 further includes a wireless interface 822, a network interface 824, a serial and/or parallel interface 826, and a modem 828. Wireless interface 822 allows client device 108 to receive input commands and other information from a viewer-operated input device, such as from a remote control device or from another IR, Bluetooth, or similar RF input device.

Network interface 824 and serial and/or parallel interface 826 allows client device 108 to interact and communicate with other electronic and computing devices via various communication links. Although not shown, client device 108 may also include other types of data communication interfaces to communicate with other devices. Modem 828 facilitates client device 108 communications with other electronic and computing devices via a conventional telephone line. Components seen at reference numerals 816 and 822-828 facilitate applications where client device 108 has Internet access or communicates data on a two-way network.

Client device 108 also includes an audio output 830 and a video output 832 that provide signals to a television or other device that processes and/or presents or otherwise renders the audio and video data. Although shown separately, some of the components of client device 108 may be implemented in an application specific integrated circuit (ASIC). Additionally, a system bus (not shown) typically connects the various components within client device 108. A system bus can be implemented as one or more of any of several types of bus structures, including a memory bus or memory controller, a peripheral bus, an accelerated graphics port, or a local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

General reference is been made herein to one or more client devices, such as client device 108. As used herein, "client device" means any electronic device having data communications, data storage capabilities, and/or functions to process signals, such as broadcast signals, received from any of a number of different sources.

Implementations extend to methods, client devices, digital video recorders, computer programs, and systems for recording programming content by requesting and receiving real time data. The implementations may comprise a special purpose or general purpose computer including various computer hardware as discussed by way of example in greater detail above.

Implementations also include computer-readable media for carrying or having computer-executable instructions or data structures stored thereon. Such computer-readable media can be any available media which can be accessed by a general purpose or special purpose computer. One example of a special purpose computer is a set top box. By way of example, and not limitation, such computer-readable media can comprise RAM, ROM, EEPROM, CD-ROM, DVR-R or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such a connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

The Figures and the foregoing discussion are intended to provide a brief, general description of a suitable computing environment in which the invention may be implemented. Although not required, the invention has been described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that the invention may be practiced in network computing environments with many types of computer system configurations, including set top boxes, personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

## Claims

1. A client device (108, 108(1)-108(N)) comprising:
a processor (804);
a memory (806-812) including an application program (802, 816, 818) that when executed on the processor:
receives (302), for storage in the memory, a program guide having a plurality of video broadcast events each including, respectively:
an event schedule; and
a broadcast address;
receives (304) a plurality of requests to record a plurality of said video broadcasts corresponding to a respective plurality of said video broadcast events;
requests and receives (504, 512) an updated event schedule corresponding to each said video broadcast event;
derives an indictor for potential variance from the event schedule for each said requested recording of one said video broadcast; and
identifies (306), using respective said indictors for potential variance from the event schedule, conflicts between chronologically adjacent said video broadcast events; and
a video recorder capable of recording (520) one or more video broadcasts from corresponding said broadcast channels according to the updated event schedule.

2. The client device as defined in claim 1, wherein for each said requested recording of one said video broadcast, the indictor for potential variance from the event schedule is heuristically determined from whether the one said video broadcast is within the group consisting of:
a live program;
a sports program;
a delayed program; and
a non-repeat program.

3. The client device as defined in claim 1 or 2, further comprising a diagnostic output mechanism, wherein the application program when executed on the processor and in response to the identifying of one said conflict between chronologically adjacent said video broadcast events, further outputs (308) a diagnostic to the diagnostic output mechanism.

4. The client device as defined in one of claims 1 to 3, wherein the memory stores a respective one said video broadcast event for each said request to record one said video broadcast corresponding to one said broadcast event.

5. The client device as defined in claim 4, wherein the application program, when executed on the processor, further:
receives an instruction to remove a conflicting said video broadcast event from said memory, where the conflicting said video broadcast event corresponds to said one said conflict between chronologically adjacent said video broadcast events.

6. The client device as defined in one of claims 1 to 5, wherein the application program comprises:
a transreceiver to request and receive said updated event schedule corresponding to said one or more video broadcasts on said broadcast channel of a broadcast network (110).

7. The client device as defined in claim 6, wherein the transreceiver receives the updated event schedule from a transmission received from a two-way network (110) in response to a request for same that is transmitted on the two-way network from the transreceiver.

8. The client device as defined in claim 6 or 7, wherein the memory further includes the event schedule having a date (124) and starting time (126); and
wherein the transreceiver requests the updated event schedule prior to the starting time of the event schedule.

9. The client device as defined in one of claims 6 to 8, wherein:
the updated event schedule includes a start time (126) and a duration; and
the transreceiver receives an updated event schedule corresponding to the video broadcast event at one or more times selected from the group consisting of:
prior to the start time of the event schedule;
at the start time of the event schedule;
prior to the start time of the event schedule plus the duration of the event schedule;
at the start time of the event schedule plus the duration of the event schedule;
prior to the start time of the updated event schedule;
at the start time of the updated event schedule;
prior to the start time of the updated event schedule plus the duration of the updated event schedule; and
at the start time of the updated event schedule plus the duration of the updated event schedule.

10. The client device as defined in one of claims 1 to 9 being a digital video recorder, wherein the processor is coupled to the memory;
wherein the program guide is an electronic program guide maintained in the memory and executed on the processor;
wherein the application program comprises a recording application configured to:
receive said plurality of requests to record said plurality of video broadcasts, wherein the request corresponds to video broadcast data (120) and includes a broadcast channel, a video broadcast title (122), a start time (126), and a duration in the electronic program guide;
create said plurality of video broadcast events corresponding to the request to record said plurality of video broadcasts;
wherein the application program further comprises a transmission application configured to request and receive said updated event schedule having video broadcast data corresponding to the video broadcast data of the request to record the video broadcast.

11. The client device as defined in claim 10, further comprising a two-way network port (134, 212-220, 822-828) configured to receive the updated event schedule in response to a request for same that is transmitted to the two-way network port by the transmission application.

12. The client device as defined in claim 10 or 11, wherein the recording application is further configured to:
receive said plurality of said requests to record said plurality of said video broadcasts, each said video broadcast data further including said indictor for potential variance from the event schedule, wherein said indictor is an indictor for potential variance from the start time and the duration in the electronic program guide; and
determine, from the electronic program guide and the respective said indictors for potential variance, whether overlapping exists for any chronologically adjacent said video broadcasts.

13. The client device as defined in claim 12, wherein the recording application is further configured to exclude, in any said chronologically adjacent said video broadcasts where said overlapping exists, the video broadcast selected from the group consisting of:
the chronologically last said video broadcast;
the chronologically first said video broadcast; and
both said chronologically adjacent said video broadcasts.

14. The client device as defined in claim 12 or 13, further comprising a diagnostic output mechanism, wherein the recording application is further configured, in response to the determination of the existence of any said chronologically adjacent said video broadcasts that overlap, to output (308) a diagnostic on the diagnostic output mechanism.

15. The client device as defined in one of claims 12 to 14, wherein the recording application is further configured, in response to the determination of the existence of any said chronologically adjacent said video broadcasts that overlap, to receive an instruction to remove the video broadcast event corresponding to the request to record the video broadcast that corresponds to one said video broadcast of said chronologically adjacent said video broadcasts that overlap.

16. The client device as defined in one of claims 1 to 15 being a video recording apparatus, wherein the application program is arranged for requesting and receiving said updated event schedule corresponding to said one or more video broadcasts on said broadcast addresses of a broadcast network (110); and
wherein the video recorder is arranged for recording, according to the updated event schedule, said one or more video broadcasts received from said broadcast addresses of the broadcast network.

17. The client device as defined in one of claims 1 to 16 being a video recording apparatus, wherein the memory is arranged for storing said video broadcast events each including, respectively, said event schedule and said broadcast address; and
wherein the video recorder is arranged for recording, according to the updated event schedule, said one or more video broadcasts received from said broadcast addresses.

18. The client device as defined in claim 17, wherein the memory comprises:
means for receiving said plurality of video broadcast events each including, respectively:
said event schedule;
said broadcast address; and
said indictor for potential variance from the event schedule.

19. The client device as defined in claim 18, further comprising means for outputting (308) a diagnostic in response to said identifying of one said conflict between chronologically adjacent said video broadcast events.

20. The client device as defined in claim 18 or 19, wherein the memory stores a respective one said video broadcast event for each said request to record one said video broadcast corresponding to one said broadcast event.

21. The client device as defined in claim 19, further comprising means for receiving an instruction to remove a conflicting said video broadcast event from said memory, where the conflicting said video broadcast event corresponds to said one said conflict between chronologically adjacent said video broadcast events.

22. The client device as defined in one of claims 17 to 21, wherein:
both the event schedule and the updated event schedule include a start time (126) and a duration; and
the application program automatically receives the updated event schedule at one or more times selected from the group consisting of:
prior to the start time of the event schedule;
at the start time of the event schedule;
prior to the start time of the event schedule plus the duration of the event schedule;
at the start time of the event schedule plus the duration of the event schedule;
prior to the start time of the updated event schedule;
at the start time of the updated event schedule;
prior to the start time of the updated event schedule plus the duration of the updated event schedule; and
at the start time of the updated event schedule plus the duration of the updated event schedule.

23. A system (100) comprising:
a broadcast network (110) for broadcasting on a plurality of channels;
an interconnected network having a plurality of network addresses thereon;
means (152), at a first said network address on the interconnected network, for storing updated event schedules each including one said channel, a start time (126), and a duration corresponding to a video broadcast event on the broadcast network, and induding:
means for receiving said updated event schedules;
means for receiving a request for one said updated event schedule from a second said network address; and
means for transmitting to the second said network address, in response to the request, the one said updated event schedule;
the client device as defined in one of claims 1 to 22, at the second said network address, for recording said one or more video broadcasts, wherein:
the application program is arranged for forming and transmitting to the first said network address the request for one said updated event schedule and for receiving the one said updated event schedule; and
the video recorder is arranged for recording, according to the one said updated event schedule, said one or more video broadcasts received from the broadcast network.

24. The system as defined in claim 23, wherein:
the video recorder includes means for storing said event schedules each including one said channel, a start time (126), and a duration corresponding to a video broadcast event on the broadcast network; and
the application program performs said forming and transmitting at one or more times selected from the group consisting of:
prior to the start time of each said event schedule;
at the start time of each said event schedule;
prior to the start time plus the duration of each said event schedule;
at the start time plus the duration of each said event schedule;
prior to the start time of each said updated event schedule;
at the start time of each said updated event schedule;
prior to the start time plus the duration of each said updated event schedule; and
at the start time plus the duration of each said updated event schedule.

25. The system as defined in claim 23 or 24 being a television broadcasting system, wherein said broadcast network is a television broadcast network for video signals broadcasting on said plurality of channels;
wherein said means, at the first said network address, for storing said updated event schedule further includes:
a database (152) storing said updated event schedules;
an interface to update the updated event schedules in the database;
a programming events serving module to:
receive said request for one said updated event schedule from the second said network address; and
transmit to the second said network address, in response to the request, the one said updated event schedule; and
wherein said client device, at the second said network address, further includes:
a programming events requesting module to:
form and transmit to the first said network address the request for one said updated event schedule; and
receive the one said updated event schedule.

26. A method of operating a client device (108, 108(1)-108(N)), comprising executing an application program included in a memory of the client device on a processor of the client device, including:
receiving (302), for storage in the memory, a program guide having a plurality of video broadcast events each including, respectively:
an event schedule; and
a broadcast address;
receiving (304) a plurality of requests to record a plurality of said video broadcasts corresponding to a respective plurality of said video broadcast events;
requesting and receiving (504, 512) an updated event schedule corresponding to each said video broadcast event;
deriving an indictor for potential variance from the event schedule for each said requested recording of one said video broadcast; and
identifying (306), using respective said indictors for potentia! variance from the event schedule, conflicts between chronologically adjacent said video broadcast events; and
wherein the method further comprises operating a video recorder of the client device for recording (520) one or more video broadcasts from corresponding said broadcast channels according to the updated event schedule.

27. The method as defined in claim 26, wherein said requesting and receiving said updated event schedule comprises requesting and receiving said updated event schedule corresponding to each said video broadcast on a broadcast address of a broadcast network (110); and
wherein said recording said one or more video broadcasts comprises recording, according to the updated event schedule, the video broadcast received from the broadcast address of the broadcast network.

28. The method as defined in claim 27, wherein each of said plurality of video broadcast events further includes an indictor for potential variance from the event schedule; and
wherein the method further comprises identifying, using respective said indictors for potential variance from the event schedule, conflicts between chronologically adjacent said video broadcast events.

29. The method as defined in claim 28, further comprising outputting (308) a diagnostic in response to said identifying of one said conflict between chronologically adjacent said video broadcast events.

30. The method as defined in claim 28 or 29, further comprising storing a respective one said video broadcast event for each said request to record one said video broadcast corresponding to one said broadcast event.

31. The method as defined in 30, further comprising removing a conflicting said video broadcast event that corresponds to said one said conflict between chronologically adjacent said video broadcast events.

32. The method as defined in one of claims 27 to 31, further comprising requesting the updated event schedule prior to receiving the updated event schedule.

33. The method as defined in one of claims 27 to 32, wherein:
both the event schedule and the updated event schedule include a start time (126) and a duration; and
the requesting and receiving an updated event schedule corresponding to a video broadcast on a broadcast address of a broadcast network automatically receives the updated event schedule at one or more times selected from the group consisting of:
prior to the start time of the event schedule;
at the start time of the event schedule;
prior to the start time of the event schedule plus the duration of the event schedule;
at the start time of the event schedule plus the duration of the event schedule;
prior to the start time of the updated event schedule;
at the start time of the updated event schedule;
prior to the start time of the updated event schedule plus the duration of the updated event schedule; and
at the start time of the updated event schedule plus the duration of the updated event schedule.

34. The method as defined in one of claims 26 to 33, arranged for operating a set top box of said client device, the set top box receiving programming content including one of said plurality of video broadcasts wherein said video broadcast is described by guide data (120), wherein said video broadcast is to be recorded by the set top box, wherein the method is further arranged for recording said video broadcast in its entirety, and wherein the method further comprises:
requesting and receiving said updated event schedule on a two-way network (110) to update timing information (126, 128) included in the guide data, wherein said updated event schedule includes an actual start time (126) of said video broadcast and an actual end time (128) of said video broadcast;
beginning a recording (520) of said video broadcast within a first predetermined time range of the actual start time as indicated in the timing information; and
ending the recording of said video broadcast within a second predetermined time range of the actual end time of said video broadcast as indicated in said updated event schedule.

35. The method as defined in claim 34, wherein said updated event schedule is requested and received as said video broadcast is being recorded.

36. The method as defined in claim 34 or 35, further comprising tuning the programming content to said video broadcast to be recorded, wherein the timing information included in the guide data received by the set top box in the programming content includes a designated start time (126) and a designated end time (128) for said video broadcast.

37. The method as defined in one of claims 34 to 36, further comprising selecting said video broadcast by a viewer.

38. The method as defined in claim 37, wherein the selecting said video broadcast by the viewer further comprises displaying guide data including said video broadcast to the viewer.

39. The method as defined in claim 37 or 38, wherein the selecting said video broadcast further comprises displaying the guide data to the viewer on a display device (136, 136(1), 136(2), 138).

40. The method as defined in one of claims 34 to 39, wherein the requesting and receiving said updated event schedule on said two-way network to update said timing information included in the guide data further comprises:
requesting and receiving, on the two-way network, said updated event schedule before a scheduled start time (126) of said video broadcast included in the guide data as received by the set top box receiving in the programming content.

41. The method as defined in one of claims 34 to 40, wherein the requesting and receiving said updated event schedule on said two-way network to update said timing information included in the guide data further comprises:
ensuring that said video broadcast being recorded by the set top box is the same video broadcast selected by a viewer to be recorded.

42. The method as defined in one of claims 34 to 41, wherein the requesting and receiving said updated event schedule on said two-way network to update said timing information included in the guide data further comprises:
requesting and receiving said updated event schedule on the two-way network to update said timing information before a scheduled end time (128) of said video broadcast included in the guide data as received by the set top box receiving in the programming content.

43. The method as defined in one of claims 34 to 42, further comprising suspending the recording when said video broadcast is interrupted as determined from said updated event schedule received by the set top box, wherein the recording continues after the interruption until the actual end time of said video broadcast is reached.

44. The method as defined in one of claims 34 to 43, wherein said updated event schedule includes:
video broadcast information identifying a video broadcast currently being broadcast; and
indicia that said video broadcast that is to be recorded is no longer currently being broadcast.

45. The method as defined in one of claims 34 to 44, further comprising extending a length of the recording until the actual end time of said video broadcast as indicated in the said updated event schedule is reached.

46. The method as defined in one of claims 34 to 45, wherein the recording is stored on a storage medium of the set top box.

47. The method as defined in one of claims 26 to 46, further comprising:
storing, at a first of a plurality of network addresses on an interconnected network (110), said updated event schedules each including one said channel, a start time (126), and a duration corresponding to one of said plurality of broadcast events on a channel of a broadcast network (110);
receiving said updated event schedules at said first said network address;
receiving, at said first said network address from said client device at a second said network address, a request for one said updated event schedule; and
transmitting to the second said network address, in response to the request, the one said updated event schedule; and
wherein said recording, at the second said network address, said one or more video broadcasts includes:
forming and transmitting the request for one said updated event schedule to the first said network address;
receiving the one said updated event schedule; and
recording, according to the one said updated event schedule, said one or more video broadcasts received from the broadcast network.

48. The method as defined in claim 47, wherein:
the recording the video broadcast includes storing said event schedules each including one said channel, a start time (126), and a duration corresponding to a video broadcast event on the broadcast network; and
the forming and transmitting the request for one said updated event schedule to the first said network address is performed at one or more times selected from the group consisting of:
prior to the start time of each said event schedule;
at the start time of each said event schedule;
prior to the start time plus the duration of each said event schedule;
at the start time plus the duration of each said event schedule;
prior to the start time of each said updated event schedule;
at the start time of each said updated event schedule;
prior to the start time plus the duration of each said updated event schedule; and
at the start time plus the duration of each said updated event schedule.

49. One or more computer-readable media (806-812) comprising computer executable instructions that, when executed, direct a client device (108, 108(1)-108(N)) to:
receive a viewer request to record a plurality of programs;
generate a record chart that designates, for each said program, a duration, a start time (126), a broadcast date (124), and a broadcast channel; and
for each said program in the record chart:
transmit a first request, prior to the start time on the broadcast date, for an update to the broadcast date, the duration and the start time;
receive, in response to the first request, any first update to the broadcast date, the duration, and the start time;
derive an indictor for potential variance from the event schedule for each said requested recording of one said video broadcast;
identify (306), using respective said indictors for potential variance from the event schedule, conflicts between chronologically adjacent said video broadcast events; and
operate a video recorder of the client device for recording (520) one or more video broadcasts from corresponding said broadcast channels according to the updated event schedule.

50. One or more computer-readable media as defined in claim 49, further comprising computer executable instructions that, when executed, direct the client device to:
for each said program in the record chart:
transmit a second request, at the start time on the broadcast date, for a second update to the broadcast date, the duration and the start time;
receive, in response to the second request, any said second update to the broadcast date, the duration, and the start time; and
reset the broadcast date, the duration and the start time according to any received said second update thereto.

51. One or more computer-readable media as defined in claim 50, further comprising computer executable instructions that, when executed, direct the client device to, for each said program in the record chart, record a video broadcast from the start time for the duration on the broadcast date for the broadcast channel.

52. One or more computer-readable media as defined in one of claims 49 to 51, further comprising computer-executable instructions that, when executed, direct a computing system (100, 108, 108(1)-108(N)) to perform the method of one of claims 26 to 48.

## Patentansprüche

1. Client-Vorrichtung (108, 108(1)-108(N)), umfassend:
einen Prozessor (804);
einen Speicher (806-812), enthaltend ein Applikationsprogramm (802, 816, 818), das, wenn es auf dem Prozessor ausgeführt wird:
zur Speicherung im Speicher einen Programmführer mit einer Vielzahl von Videoausstrahlungsereignissen empfängt (302), die jeweils:
einen Ereignisplan; und
eine Rundfunkadresse enthalten;
mehrere Anfragen empfängt (304), um eine Vielzahl von Videoausstrahlungen entsprechend einer jeweiligen Vielzahl der Videoausstrahlungsereignisse aufzuzeichnen;
einen aktualisierten Ereignisplan entsprechend jedem Videoausstrahlungsereignis anfragt und empfängt (504, 512);
einen Indikator für eine mögliche Abweichung vom Ereignisplan für jede der angefragten Aufzeichnungen einer der Videoausstrahlungen ableitet; und
unter Verwendung der jeweiligen Indikatoren für eine mögliche Abweichung vom Ereignisplan Konflikte zwischen zeitlich benachbarten Videoausstrahlungsereignissen identifiziert (306); und
einen Videorekorder, der in der Lage ist, eine oder mehrere Videoausstrahlungen von den entsprechenden Ausstrahlungskanälen gemäß dem aktualisierten Ereignisplan aufzuzeichnen (520).

2. Client-Vorrichtung nach Anspruch 1, bei der für jede angefragte Aufzeichnung einer Videoausstrahlung der Indikator für die mögliche Abweichung vom Ereignisplan heuristisch daraus ermittelt wird, ob die Videoausstrahlung Bestandteil der Gruppe ist, die besteht aus:
einer Live-Sendung;
einer Sportsendung;
einer verzögerten Sendung und
einer Sendung, die nicht wiederholt wird.

3. Client-Vorrichtung nach Anspruch 1 oder 2, weiterhin umfassend einen Diagnose-Ausgabemechanismus, bei dem das Applikationsprogramm, wenn es auf dem Prozessor ausgeführt wird, und in Erwiderung auf die Identifizierung des Konfliktes zwischen den zeitlich benachbarten Videoausstrahlungsereignissen weiterhin eine Diagnose an den Diagnose-Ausgabemechanismus ausgibt (308).

4. Client-Vorrichtung nach einem der Ansprüche 1 bis 3, bei der der Speicher ein entsprechendes Videoausstrahlungsereignis für jede Anfrage speichert, um eine Videoausstrahlung entsprechend diesem Ausstrahlungsereignis aufzuzeichnen.

5. Client-Vorrichtung nach Anspruch 4, bei dem das Applikationsprogramm, wenn es im Prozessor ausgeführt wird, weiterhin
einen Befehl empfängt, um ein konfliktverursachendes Videoausstrahlungsereignis aus dem Speicher zu entfernen, wobei das konfliktverursachende Videoausstrahlungsereignis dem Konflikt zwischen den zeitlich benachbarten Videoausstrahlungsereignissen entspricht.

6. Client-Vorrichtung nach einem der Ansprüche 1 bis 5, bei dem das Applikationsprogramm enthält:
einen Sendeempfänger, um den aktualisierten Ereignisplan entsprechend einer oder mehreren Videoausstrahlungen auf dem Ausstrahlungskanal eines Rundfunknetzes (110) abzufragen und zu empfangen.

7. Client-Vorrichtung nach Anspruch 6, bei der der Sendeempfänger den aktualisierten Ereignisplan aus einer Sendung erhält, die über ein Zweiwege-Netzwerk (110) in Erwiderung auf eine Anfrage nach demselben empfangen wird, die über das Zweiwege-Netzwerk vom Sendeempfänger gesendet wird.

8. Client-Vorrichtung nach Anspruch 6 oder 7, bei dem der Speicher weiterhin den Ereignisplan mit einem Datum (124) und einem Startzeitpunkt (126) enthält; und
bei dem der Sendeempfänger den aktualisierten Ereignisplan vor dem Startzeitpunkt des Ereignisplans anfragt.

9. Client-Vorrichtung nach einem der Ansprüche 6 bis 8, bei dem:
der aktualisierte Ereignisplan einen Startzeitpunkt (126) sowie eine Dauer enthält; und
der Sendeempfänger einen aktualisierten Ereignisplan entsprechend dem Videoausstrahlungsereignis zu einem oder mehreren Zeitpunkten empfängt, die aus der Gruppe gewählt sind, die besteht aus:
vor dem Startzeitpunkt des Ereignisplans;
zum Startzeitpunkt des Ereignisplans;
vor dem Startzeitpunkt des Ereignisplans plus der Dauer des Ereignisplans;
zum Startzeitpunkt des Ereignisplans plus der Dauer des Ereignisplans;
vor dem Startzeitpunkt des aktualisierten Ereignisplans;
zum Startzeitpunkt des aktualisierten Ereignisplans;
vor dem Startzeitpunkt des aktualisierten Ereignisplans plus der Dauer des aktualisierten Ereignisplans und
zum Startzeitpunkt des aktualisierten Ereignisplans plus der Dauer des aktualisierten Ereignisplans.

10. Client-Vorrichtung nach einem der Ansprüche 1 bis 9 als digitaler Videorekorder, bei dem der Prozessor mit dem Speicher gekoppelt ist;
der Programmführer ein elektronischer Prog rammführer ist, der im Speicher geführt und im Prozessor ausgeführt wird;
das Applikationsprogramm eine Aufzeichnungsapplikation enthält, die dazu eingerichtet ist:
die Vielzahl der Anfragen zu empfangen, um die Vielzahl der Videoausstrahlungen aufzuzeichnen, wobei die Anfrage Videoausstrahlungsdaten (120) entspricht und einen Ausstrahlungskanal, einen Videoausstrahlungstitel (122), einen Startzeitpunkt (126) und eine Dauer im elektronischen Programmführer enthält;
und die Vielzahl der Videoausstrahlungsereignisse entsprechend der Anfrage zu erzeugen, um die Vielzahl der Videoausstrahlungen aufzuzeichnen;
und das Applikationsprogramm weiterhin eine Sendeapplikation enthält, die dazu eingerichtet ist, den aktualisierten Ereignisplan, der über Videoausstrahlungsdaten entsprechend den Videoausstrahlungsdaten der Abrage verfügt, anzufragen und zu empfangen, um die Videoausstrahlung aufzuzeichnen.

11. Client-Vorrichtung nach Anspruch 10, weiterhin enthaltend einen Zweiwege-Netzwerkanschluss (134, 212-220, 822-828), der derart konfiguriert ist, dass er den aktualisierten Ereignisplan in Erwiderung auf eine Anfrage nach demselben empfängt, die zum Zweiwege-Netzwerkanschluss durch die Sende-Applikation gesendet wird.

12. Client-Vorrichtung nach Anspruch 10 oder 11, wobei die Aufzeichnungs-Applikation weiterhin derart konfiguriert ist, dass:
sie die Vielzahl der Anfragen empfängt, um die Vielzahl der Videoausstrahlungen aufzuzeichnen, wobei sämtliche Videoausstrahlungsdaten weiterhin den Indikator für eine mögliche Abweichung vom Ereignisplan enthalten und der Indikator ein Indikator für eine mögliche Abweichung vom Startzeitpunkt und der Dauer im elektronischen Programmführer ist; und
sie aus dem elektronischen Programmführer und den entsprechenden Indikatoren für eine mögliche Abweichung ermittelt, ob eine Überschneidung für beliebige der zeitlich benachbarten Videoausstrahlungen existiert.

13. Client-Vorrichtung nach Anspruch 12, bei der die Aufzeichnungs-Applikation weiterhin derart konfiguriert ist, dass sie von beliebigen der zeitlich benachbarten Videoausstrahlungen, bei denen eine Überschneidung vorhanden ist, die Videoausstrahlung ausschließt, die Bestandteil der Gruppe ist, die besteht aus:
der zeitlich letzten Videoausstrahlung,
der zeitlich ersten Videoausstrahlung und
beiden zeitlich benachbarten Videoausstrahlungen.

14. Client-Vorrichtung nach Anspruch 12 oder 13, weiterhin enthaltend einen Diagnose-Ausgabemechanismus, wobei die Aufzeichnungsapplikation weiterhin dazu eingerichtet ist, in Erwiderung auf die Ermittlung der Existenz einer Überschneidung beliebiger der zeitlich benachbarten Videoausstrahlungen eine Diagnose auf dem Diagnose-Ausgabemechanismus auszugeben (308).

15. Client-Vorrichtung nach einem der Ansprüche 12 bis 14, bei der die Aufzeichnungs-Applikation weiterhin derart konfiguriert ist, dass sie in Erwiderung auf die Ermittlung der Existenz einer Überschneidung beliebiger der zeitlich benachbarten Videoausstrahlungen einen Befehl empfängt, das Videoausstrahlungsereignis entsprechend der Anfrage zur Aufzeichnung der Videoausstrahlung zu entfernen, die einer Videoausstrahlung der zeitlich benachbarten Videoausstrahlungen entspricht, die sich überschneiden.

16. Client-Vorrichtung nach einem der Ansprüche 1 bis 15 als Videoaufzeichnungsgerät, wobei das Applikationsprogramm derart eingerichtet ist, dass es den aktualisierten Ereignisplan entsprechend der einen oder mehreren Videoausstrahlungen über die Ausstrahlungsadressen eines Rundfunknetzes (110) anfragt und empfängt; und
bei der der Videorekorder zur Aufzeichnung einer oder mehrerer Videoausstrahlungen gemäß dem aktualisierten Ereignisplan eingerichtet ist, die von den Ausstrahlungsadressen des Rundfunknetzes empfangen werden.

17. Client-Vorrichtung nach einem der Ansprüche 1 bis 16 als Videoaufzeichnungsgerät, wobei der Speicher dazu eingerichtet ist, die Videoausstrahlungsereignisse, die jeweils den Ereignisplan und die Ausstrahlungsadresse enthalten, zu speichern; und
der Videorekorder dazu eingerichtet ist, gemäß dem aktualisierten Ereignisplan eine oder mehrere Videoausstrahlungen aufzuzeichnen, die von den Ausstrahlungsadressen empfangen werden.

18. Client-Vorrichtung nach Anspruch 17, bei der der Speicher umfasst:
eine Einrichtung zum Empfangen der Vielzahl von Videoausstrahlungsereignissen, die jeweils enthalten:
den Ereignisplan;
die Ausstrahlungsadresse und
den Indikator für die mögliche Abweichung vom Ereignisplan.

19. Client-Vorrichtung nach Anspruch 18, weiterhin enthaltend eine Einrichtung zum Ausgeben (308) einer Diagnose in Erwiderung auf die Identifizierung des Konfliktes zwischen den zeitlich benachbarten Videoausstrahlungsereignissen.

20. Client-Vorrichtung nach Anspruch 18 oder 19, bei der der Speicher ein entsprechendes Videoausstrahlungsereignis für jede Anfrage speichert, um die Videoausstrahlung entsprechend einem Ausstrahlungsereignis aufzuzeichnen.

21. Client-Vorrichtung nach Anspruch 19, weiterhin enthaltend eine Einrichtung zum Empfangen eines Befehls, um ein konfliktverursachendes Videoausstrahlungsereignis aus dem Speicher zu entfernen, wobei d as konfliktverursachende Videoausstrahlungsereignis dem Konflikt zwischen den zeitlich benachbarten Videoausstrahlungsereignissen entspricht.

22. Client-Vorrichtung nach einem der Ansprüche 17 bis 21, wobei:
sowohl der Ereignisplan als auch der aktualisierte Ereignisplan einen Startzeitpunkt (126) und eine Dauer enthalten; und
das Applikationsprogramm automatisch den aktualisierten Ereignisplan zu einem oder mehreren Zeitpunkten empfängt, die aus der Gruppe gewählt sind, die besteht aus:
vor dem Startzeitpunkt des Ereignisplans;
zum Startzeitpunkt des Ereignisplans;
vor dem Startzeitpunkt des Ereignisplans plus der Dauer des Ereignisplans;
zum Startzeitpunkt des Ereignisplans plus der Dauer des Ereignisplans;
vor dem Startzeitpunkt des aktualisierten Ereignisplans;
zum Startzeitpunkt des aktualisierten Ereignisplans;
vor dem Startzeitpunkt des aktualisierten Ereingisplans plus der Dauer des aktualisierten Ereignisplans und
zum Startzeitpunkt des aktualisierten Ereignisplans plus der Dauer des aktualisierten Ereignisplans.

23. System (100) umfassend:
ein Rundfunknetzwerk (110) für Ausstrahlungen auf einer Vielzahl von Kanälen;
ein Verbindungsnetzwerk, das über eine Vielzahl von Netzwerkadressen verfügt;
eine Einrichtung (152) an einer ersten Netzwerkadresse des Verbindungsnetzwerks, die aktualisierte Ereingispläne, die jeweils einen Kanal, einen Startzeitpunkt (126) und eine Dauer enthalten, entsprechend einem Videoausstrahlungsereignis auf dem Rundfunknetz speichert, enthaltend:
eine Einrichtung zum Empfangen der aktualisierten Ereignispläne;
eine Einrichtung zum Empfangen einer Anfrage nach einem aktualisierten Ereignisplan von einer zweiten Netzwerkadresse und
eine Einrichtung zum Senden des aktualisierten Ereingisplans zur zweiten Netzwerkadresse in Erwiderung auf die Anfrage;
die Client-Vorrichtung nach einem der Ansprüche 1 bis 22 an der zweiten Netzwerkadresse zum Aufzeichnen einer oder mehrerer Videoausstrahlungen, wobei:
das Applikationsprogramm derart eingerichtet ist, dass es die Anfrage nach einem aktualisierten Ereignisplan erzeugt und zur ersten Netzwerkadresse sendet und den aktualisierten Ereignisplan empfängt; und
der Videorekorder dazu eingerichtet ist, gemäß dem aktualisierten Ereignisplan eine oder mehrere Videoausstrahlungen aufzuzeichnen, die über das Rundfunknetz empfangen werden.

24. System nach Anspruch 23, bei dem
der Videorekorder eine Einrichtung enthält, die die Ereignispläne, die jeweils einen Kanal, einen Startzeitpunkt (126) und eine Dauer enthalten, gemäß einem Videoausstrahlungsereignis auf dem Rundfunknetz speichert; und
das Applikationsprogramm die Erzeugung und Sendung zu einem oder mehreren Zeitpunkten ausführt, die aus der Gruppe gewählt sind, die besteht aus:
vor dem Startzeitpunkt jedes Ereignisplans;
zum Startzeitpunkt jedes Ereignisplans;
vor dem Startzeitpunkt plus der Dauer jedes Ereignisplans;
zum Startzeitpunkt plus der Dauer jedes Ereingisplans;
vor dem Startzeitpunkt jedes aktualisierten Ereignisplans;
zum Startzeitpunkt jedes aktualisierten Ereignisplans;
vor dem Startzeitpunkt plus der Dauer jedes aktualisierten Ereingisplans und
zum Startzeitpunkt plus der Dauer jedes aktualisierten Ereignisplans.

25. System nach Anspruch 23 oder 24 als Fernsehrundfunksystem, bei dem das Rundfunknetz ein Femsehrundfunknetz für Videosignale ist, das auf einer Vielzahl von Kanälen ausstrahlt;
wobei die Einrichtung an der ersten Netzwerkadresse zum Speichern des aktualisierten Ereignisplans weiterhin enthält:
eine Datenbank (152), die die aktualisierten Ereignispläne speichert;
eine Schnittstelle zum Aktualisieren der Ereignispläne in der Datenbank;
ein Programmereignis-Liefer-Modul, das:
die Anfrage nach dem aktualisierten Ereignisplan von der zweiten Netzwerkadresse empfängt, und
das in Erwiderung auf die Anfrage zur zweiten Netzwerkadresse den aktualisierten Ereignisplan sendet;
und bei dem die Clientvorrichtung an der zweiten Netzwerkadresse weiterhin enthält:
ein Programmereignis-Anfragemodul, das:
die Anfrage nach dem aktualisierten Ereignisplan erzeugt und zur ersten Netzwerkadresse sendet, und
das den aktualisierten Ereignisplan empfängt.

26. Verfahren zum Betreiben einer Client-Vorrichtung (108, 108(1)-108(N)), umfassend das Ausführen eines Applikationsprogramms, das in einem Speicher der Clientvorrichtung enthalten ist, in einem Prozessor der Clientvorrichtung, enthaltend:
Empfangen (302), zum Speichern im Speicher, eines Programmführers mit einer Vielzahl von Videoausstrahlungsereignissen, die jeweils enthalten:
einen Ereignisplan und
eine Ausstrahlungsadresse;
Empfangen (304) einer Vielzahl von Anfragen, um eine Vielzahl der Videoausstrahlungen entsprechend einer jeweiligen Vielzahl der Videoausstrahlungsereignisse aufzuzeichnen;
Anfragen und Empfangen (504, 512) eines aktualisierten Ereignisplans entsprechend jedem Videoausstrahlungsereignis;
Ableiten eines Indikators für eine mögliche Abweichung vom Ereignisplan für jede der angefragten Aufzeichnungen einer Videoausstrahlung und,
Identifizieren (306) von Konflikten zwischen zeitlich benachbarten Videoausstrahlungsereignissen unter Verwendung der jeweiligen Indikatoren für eine mögliche Abweichung vom Ereignisplan;
wobei das Verfahren weiterhin den Betrieb eines Videorekorders der Client-Vorrichtung zum Aufzeichnen (520) einer oder mehrerer Videoausstrahlungen von den entsprechenden Ausstrahlungskanälen gemäß dem aktualisierten Ereignisplan beinhaltet.

27. Verfahren nach Anspruch 26, bei dem das Anfragen und Empfangen des aktualisierten Ereignisplans das Anfragen und Empfangen des aktualisierten Ereignisplans entsprechend jeder Videoausstrahlung an einer Ausstrahlungsadresse eines Rundfunknetzes (110) beinhaltet, und
bei dem das Aufzeichnen der einen oder mehreren Videoausstrahlungen das Aufzeichnen der Videoausstrahlung, die von der Ausstrahlungsadresse des Rundfunknetzes empfangen wird, gemäß dem aktualisierten Ereignisplan beinhaltet.

28. Verfahren nach Anspruch 27, bei dem jedes der Vielzahl von Videoausstrahlungsereignissen weiterhin einen Indikator für eine mögliche Abweichung vom Ereignisplan beinhaltet; und
bei dem das Verfahren weiterhin das Identifizieren von Konflikten zwischen zeitlich benachbarten Videoausstrahlungsereignissen unter Verwendung der jeweiligen Indikatoren für eine mögliche Abweichung vom Ereignisplan umfasst.

29. Verfahren nach Anspruch 29, weiterhin enthaltend das Ausgeben (308) einer Diagnose in Erwiderung auf die Identifizierung eines Konfliktes zwischen zeitlich benachbarten Videoausstrahlungsereignissen.

30. Verfahren nach Anspruch 28 oder 29, weiterhin enthaltend das Speichern eines entsprechenden Videoausstrahlungsereignisses für jede Anfrage, um eine Videoausstrahlung entsprechend eines Ausstrahlungsereignisses aufzuzeichnen.

31. Verfahren nach Anspruch 30, weiterhin enthaltend das Entfernen eines konfliktverursachenden Videoausstrahlungsereignisses, das dem Konflikt zwischen den zeitlich benachbarten Videoausstrahlungsereignissen entspricht.

32. Verfahren nach einem der Ansprüche 27 bis 31, weiterhin enthaltend die Anfrage des aktualisierten Ereignisplans vor dem Empfangen des aktualisierten Ereignisplans.

33. Verfahren nach einem der Ansprüche 27 bis 32, bei dem
sowohl der Ereignisplan als auch der aktualisierte Ereignisplan einen Startzeitpunkt (126) und eine Dauer enthalten; und
bei der Anfrage sowie dem Empfang eines aktualisierten Ereignisplans entsprechend einer Videoausstrahlung an einer Ausstrahlungsadresse eines Rundfunknetzes automatisch der aktualisierten Ereignisplan zu einem oder mehreren Zeitpunkten empfangen wird, die aus der Gruppe gewählt sind, die besteht aus:
vor dem Startzeitpunkt des Ereignisplans;
zum Startzeitpunkt des Ereignisplans;
vor dem Startzeitpunkt des Ereignisplans plus der Dauer des Ereignisplans;
zum Startzeitpunkt des Ereignisplans plus der Dauer des Ereignisplans;
vor dem Startzeitpunkt des aktualisierten Ereignisplans;
zum Startzeitpunkt des aktualisierten Ereignisplans;
vor dem Startzeitpunkt des aktualisierten Ereignisplans plus der Dauer des aktualisierten Ereignisplans; und
zum Startzeitpunkt des aktualisierten Ereignisplans plus der Dauer des aktualisierten Ereignisplans.

34. Verfahren nach einem der Ansprüche 26 bis 33, das zum Betreiben eines Digitalempfängers der Client-Vorrichtung eingerichtet ist, wobei der Digitalempfänger einen Programminhalt mit einer der zahleichen Videoausstrahlungen enthält, die Videoausstrahlung durch Führerdaten (120) beschrieben ist, die Videoausstrahlung durch den Digitalempfänger aufgezeichnet werden soll, das Verfahren weiterhin zum Aufzeichnen der Videoausstrahlung in seiner Gesamtheit eingerichtet ist und das Verfahren weiterhin umfasst:
Anfragen und Empfangen des aktualisierten Ereignisplans über ein Zweiwege-Netzwerk (110), um Zeitinformationen (126, 128) zu aktualisieren, die in den Führerdaten enthalten sind, wobei der aktualisierte Ereignisplan einen tatsächlichen Startzeitpunkt (126) der Videoausstrahlung und einen tatsächlichen Endzeitpunkt (128) der Videoausstrahlung enthält;
Beginnen einer Aufzeichnung (520) der Videoausstrahlung innerhalb eines ersten festgelegten Zeitraumes des tatsächlichen Startzeitpunktes, wie er in den Zeitinformationen angezeigt ist; und
Beenden der Aufzeichnung der Videoausstrahlung innerhalb eines zweiten festgelegten Zeitraumes des tatsächlichen Endzeitpunktes der Videoausstrahlung, wie er im aktualisierten Ereignisplan angezeigt ist.

35. Verfahren nach Anspruch 34, bei dem der aktualisierte Ereignisplan angefragt und empfangen wird, wenn die Videoausstrahlung aufgezeichnet wird.

36. Verfahren nach Anspruch 34 oder 35, weiterhin enthaltend das Abstimmen des Programminhaltes auf die aufzuzeichnende Videoausstrahlung, wobei die Zeitinformationen, die in den Führerdaten enthalten sind, die im Programminhalt durch den Digitalempfänger empfangen werden, einen festgelegten Startzeitpunkt (126) und einen festgelegten Endzeitpunkt (128) für die Videoausstrahlung enthalten.

37. Verfahren nach einem der Ansprüche 34 bis 36, weiterhin enthaltend das Auswählen der Videoausstrahlung durch einen Zuschauer.

38. Verfahren nach Anspruch 37, bei dem das Auswählen der Videoausstrahlung durch den Zuschauer weiterhin das Anzeigen von Führerdaten einschließlich der Videoausstrahlung für den Benutzer beinhaltet.

39. Verfahren nach Anspruch 37 oder 38, bei dem das Auswählen der Videoausstrahlung weiterhin das Anzeigen der Führerdaten für den Benutzer auf einer Anzeigevorrichtung (136, 136(1), 136(2), 138) beinhaltet.

40. Verfahren nach einem der Ansprüche 34 bis 39, bei dem das Anfragen und Empfangen des aktualisierten Ereignisplans über das Zweiwege-Netzwerk zum Aktualisieren der Zeitinformationen, die in den Führerdaten enthalten sind, weiterhin enthält:
Anfragen und Empfangen des aktualisierten Ereignisplans vor einem geplanten Startzeitpunkt (126) der Videoausstrahlung, der in den Führerdaten enthalten ist, wie sie im Programminhalt vom Digitalempfänger empfangen werden, über das Zweiwege-Netzwerk.

41. Verfahren nach einem der Ansprüche 34 bis 40, bei dem das Anfragen und Empfangen des aktualisierten Ereignisplans über das Zweiwege-Netzwerk zum Aktualisieren der Zeitinformationen, die in den Führerdaten enthalten sind, weiterhin enthält:
Sicherstellen, dass die Videoausstrahlung, die vom Digitalempfänger aufgezeichnet wird, dieselbe Videoausstrahlung ist, die von einem Zuschauer zur Aufzeichnung gewählt wurde.

42. Verfahren nach einem der Ansprüche 34 bis 41, bei dem das Anfragen und Empfangen des aktualisierten Ereignisplans über das Zweiwege-Netzwerk zum Aktualisieren der Zeitinformationen, die in den Führerdaten enthalten sind, weiterhin enthält:
Anfragen und Empfangen des aktualisierten Ereignisplans über das Zweiwege-Netzwerk zum Aktualisieren der Zeitinformationen vor einem geplanten Endzeitpunkt (128) der Videoausstrahlung, der in den Führerdaten enthalten ist, wie sie im Programminhalt vom Digitalempfänger empfangen werden.

43. Verfahren nach einem der Ansprüche 34 bis 42, weiterhin enthaltend das Aussetzen der Aufzeichnung, wenn die Videoausstrahlung unterbrochen wird, wie es aus dem aktualisierten Ereignisplan ermittelt wird, der durch den Digitalempfänger empfangen wird, wobei die Aufzeichnung nach der Unterbrechung fortgesetzt wird, bis der tatsächliche Endzeitpunkt der Videoausstrahlung erreicht ist.

44. Verfahren nach einem der Ansprüche 34 bis 43, bei dem der aktualisierte Ereignisplan enthält:
Videoausstrahlungs-Informationen, die eine Videoausstrahlung identifizieren, die momentan ausgestrahlt wird, und
Kennzeichen, dass die Videoausstrahlung, die aufgezeichnet werden soll, derzeit nicht länger ausgestrahlt wird.

45. Verfahren nach einem der Ansprüche 34 bis 44, weiterhin enthaltend das Erweitem einer Aufzeichnungslänge, bis der tatsächliche Endzeitpunkt der Videoausstrahlung erreicht ist, wie er im aktualisierten Ereignisplan angezeigt ist.

46. Verfahren nach einem der Ansprüche 34 bis 45, bei dem die Aufzeichnung auf einem Speichermedium des Digitalempfängers gespeichert wird.

47. Verfahren nach einem der Ansprüche 26 bis 46, weiterhin enthaltend:
Speichern der aktualisierten Ereignispläne, die jeweils einen Kanal, einen Startzeitpunkt (126) und eine Dauer entsprechend eines aus der Vielzahl von Ausstrahlungsereignissen auf einem Kanal eines Rundfunknetzes (110) enthalten, an einer ersten einer Vielzahl von Netzwerkadressen in einem Verbindungsnetzwerk (110); Empfangen der aktualisierten Ereignispläne an der ersten Netzwerkadresse;
Empfangen einer Anfrage nach einem aktualisierten Ereignisplan an der ersten Netzwerkadresse von der Client-Vorrichtung an einer zweiten Netzwerkadresse und
Senden des aktualisierten Ereignisplans zur zweiten Netzwerkadresse in Erwiderung auf die Anfrage;
wobei die Aufzeichnung einer oder mehrerer Videoausstrahlungen an der zweiten Netzwerkadresse umfasst:
Erzeugen und Senden der Anfrage nach einem aktualisierten Ereignisplan zur ersten Netzwerkadresse;
Empfangen des aktualisierten Ereignisplans und
Aufzeichnen der einen oder mehreren Videoausstrahlungen, die über das Rundfunknetz empfangen werden, gemäß dem aktualisierten Ereignisplan.

48. Verfahren nach Anspruch 47, bei dem
das Aufzeichnen der Videoausstrahlung das Speichern der Ereignispläne beinhaltet, die jeweils einen Kanal, einen Startzeitpunkt (126) und eine Dauer entsprechend einem Videoausstrahlungsereignis über das Rundfunknetz enthalten, und
die Erzeugung und Sendung der Anfrage nach einem aktualisierten Ereignisplan an die erste Netzwerkadresse zu einem oder mehreren Zeitpunkten erfolgt, die aus der Gruppe gewählt sind, die besteht aus:
vor dem Startzeitpunkt jedes Ereignisplans;
zum Startzeitpunkt jedes Ereignisplan s;
vor dem Startzeitpunkt plus der Dauer jedes Ereignisplans;
zum Startzeitpunkt plus der Dauer jedes Ereignisplans;
vor dem Startzeitpunkt jedes aktualisierten Ereignisplans;
zum Startzeitpunkt jedes aktualisierten Ereignisplans;
vor dem Startzeitpunkt plus der Dauer jedes aktualisierten Ereignisplans; und
zum Startzeitpunkt plus der Dauer jedes aktualisierten Ereignisplans.

49. Eines oder mehrere computerlesbare Medien (806-812), enthaltend computerausführbare Befehle, die bei der Ausführung eine Client-Vorrichtung (108, 108(1)-108(N)) anweisen:
eine Zuschaueranfrage zu empfangen, um eine Vielzahl von Sendungen aufzuzeichnen;
eine Aufzeichnungstabelle zu erzeugen, die für jede Sendung eine Dauer, einen Startzeitpunkt (128), ein Ausstrahlungsdatum (124) und einen Ausstrahlungskanal festlegt; und
für jede Sendung in der Aufzeichnungstabelle:
eine erste Anfrage vor dem Startzeitpunkt am Ausstrahlungsdatum nach einer Aktualisierung des Ausstrahlungsdatums, der Dauer und des Startzeitpunktes zu senden;
in Erwiderung auf die erste Anfrage eine beliebige erste Aktualisierung des Ausstrahlungsdatums, der Dauer und des Startzeitpunktes zu empfangen;
einen Indikator für eine mögliche Abweichung vom Ereignisplan für jede angefragte Aufzeichnung einer Videoausstrahlung abzuleiten;
Konflikte zwischen zeitlich benachbarten Videoausstrahlungsereignissen unter Verwendung der jeweiligen Indikatoren für eine mögliche Abweichung vom Ereignisplan zu identifizieren (306) und
einen Videorekorder der Client-Vorrichtung zur Aufzeichnung (520) einer oder mehrerer Videoausstrahlungen von entsprechenden Ausstrahlungskanälen gemäß dem aktualisierten Ereignisplan zu betreiben.

50. Ein oder mehrere computerlesbare Medien nach Anspruch 49, weiterhin enthaltend computerausführbare Befehle, die bei der Ausführung die Client-Vorrichtung anweisen:
für jede Sendung in der Aufzeichnungstabelle:
eine zweite Anfrage zum Startzeitpunkt am Ausstrahlungsdatum nach einer zweiten Aktualisierung des Ausstrahlungsdatums, der Dauer und des Startzeitpunktes zu senden;
in Erwiderung auf die zweite Anfrage eine beliebige zweite Aktualisierung des Ausstrahlungsdatums, der Dauer und des Startzeitpunktes zu empfangen und
das Ausstrahlungsdatum, die Dauer und den Startzeitpunkt gemäß der zweiten empfangenen Aktualisierung rückzusetzen.

51. Ein oder mehrere computerlesbare Medien nach Anspruch 50, weiterhin enthaltend computerausführbare Befehle, die bei der Ausführung die Client-Vorrichtung anweisen, für jede Sendung in der Aufzeichnungstabelle eine Videoausstrahlung vom Startzeitpunkt für die Dauer am Ausstrahlungsdatum für den Ausstrahlungskanal aufzuzeichnen.

52. Ein oder mehrere computerlesbare Medien nach einem der Ansprüche 49 bis 51, weiterhin enthaltend computerausführbare Befehle, die bei der Ausführung ein Computersystem (100, 108, 108(1)-108(N)) anweisen, das Verfahren eines der Ansprüche 26 bis 48 auszuführen.

## Revendications

1. Dispositif client (108, 108(1)-108(N)) comprenant :
un processeur (804) ;
une mémoire (806-812) contenant un programme d'application (802, 816, 818) permettant, lorsqu'il est exécuté sur le processeur, de réaliser les opérations suivantes :
recevoir (302), pour effectuer un stockage dans la mémoire, un guide des programmes comportant une pluralité d'événements d'émission vidéo comprenant chacun, respectivement :
un horaire d'événements ; et
une adresse d'émission ;
recevoir (304) une pluralité de demandes d'enregistrement d'une pluralité desdites émissions vidéo correspondant à une pluralité respective desdits événements d'émission vidéo ;
demander et recevoir (504, 512) un horaire d'événements actualisé correspondant à chacun desdits événements d'émission vidéo ;
dériver un indicateur d'écart potentiel par rapport à l'horaire d'événements pour chacun desdits enregistrements demandés d'une dite émission vidéo ; et
identifier (306), en utilisant lesdits indicateurs respectifs d'écart potentiel par rapport à l'horaire d'événements, des conflits entre lesdits événements d'émission vidéo chronologiquement adjacents ; et
un magnétoscope capable d'enregistrer (520) une ou plusieurs émissions vidéo à partir desdits canaux d'émission correspondant conformément à l'horaire d'événements actualisé.

2. Dispositif client selon la revendication 1, dans lequel pour chacun desdits enregistrements demandés d'une dite émission vidéo, l'indicateur d'écart potentiel par rapport à l'horaire d'événements est déterminé de manière heuristique selon qu'une dite émission vidéo appartient au groupe constitué d'un des types suivants :
un programme en direct ;
un programme sportif ;
un programme en différé ; et
un programme non répété.

3. Dispositif client selon la revendication 1 ou 2, comprenant en outre un mécanisme d'émission de diagnostic, dans lequel le programme d'application, lorsqu'il est exécuté sur le processeur et en réponse à l'identification d'un dit conflit entre lesdits événements d'émission vidéo chronologiquement adjacents, émet en outre (308) un diagnostic au mécanisme d'émission de diagnostic.

4. Dispositif client selon l'une quelconque des revendications 1 à 3, dans lequel la mémoire stocke un dit événement d'émission vidéo respectif pour chaque dite demande pour enregistrer une dite émission vidéo correspondant à un dit événement d'émission.

5. Dispositif client selon la revendication 4, dans lequel le programme d'application, lorsqu'il est exécuté sur le processeur, procède en outre aux opérations suivantes :
recevoir une instruction permettant d'éliminer un dit événement d'émission vidéo en conflit dans ladite mémoire, où ledit événement d'émission vidéo en conflit correspond audit un dit conflit entre lesdits événements d'émission vidéo chronologiquement adjacents.

6. Dispositif client selon l'une quelconque des revendications 1 à 5, dans lequel le programme d'application comprend :
un émetteur-récepteur permettant de demander et recevoir ledit horaire d'événements actualisé correspondant à une dite, ou plusieurs dites émissions vidéo sur ledit canal d'émission d'un réseau de télédiffusion (110).

7. Dispositif client selon la revendication 6, dans lequel l'émetteur-récepteur reçoit l'horaire d'événements actualisé au moyen d'une transmission reçue d'un réseau bidirectionnel (110) en réponse à une demande de cette actualisation émise sur le réseau bidirectionnel par l'émetteur-récepteur.

8. Dispositif client selon la revendication 6 ou 7, dans lequel la mémoire comprend en outre l'horaire d'événements comportant une date (124) et une heure de début (126) ; et
dans lequel l'émetteur-récepteur demande l'horaire d'événements actualisé préalablement à l'heure de début de l'horaire d'événements.

9. Dispositif client selon l'une quelconque des revendications 6 à 8, dans lequel :
l'horaire d'événements actualisé comprend une heure de début (126) et une durée ; et
l'émetteur-récepteur reçoit un horaire d'événements actualisé correspondant à l'événement d'émission vidéo à un ou plusieurs moments choisis dans le groupe constitué des moments suivants :
préalablement à l'heure de début de l'horaire d'événements ;
à l'heure de début de l'horaire d'événements ;
préalablement à l'heure de début de l'horaire d'événements plus la durée de l'horaire d'événements ;
à l'heure de début de l'horaire d'événements plus la durée de l'horaire d'événements ;
préalablement à l'heure de début de l'horaire d'événements actualisé ;
à l'heure de début de l'horaire d'événements actualisé ;
préalablement à l'heure de début de l'horaire d'événements actualisé plus la durée de l'horaire d'événements actualisé ; et
à l'heure de début de l'horaire d'événements actualisé plus la durée de l'horaire d'événements actualisé.

10. Dispositif client selon l'une quelconque des revendications 1 à 9, constitué d'un magnétoscope numérique, dans lequel le processeur est relié à la mémoire ;
dans lequel le guide des programmes est un guide électronique des programmes maintenu dans la mémoire et exécuté sur le processeur ;
dans lequel le programme d'application comprend une application d'enregistrement configurée pour procéder aux opérations suivantes :
recevoir ladite pluralité de demandes d'enregistrement de ladite pluralité d'émissions vidéo, dans laquelle la demande correspond à des données d'émission vidéo (120) et inclut un canal de télédiffusion, un titre d'émission vidéo (122), une heure de début (126) et une durée dans le guide électronique des programmes ;
créer ladite pluralité d'événements d'émission vidéo correspondant à la demande d'enregistrement de ladite pluralité d'émissions vidéo ;
dans lequel le programme d'application comprend en outre une application de transmission configurée pour demander et recevoir ledit horaire d'événements actualisé comportant des données d'émission vidéo correspondant aux données d'émission vidéo de la demande d'enregistrement de l'émission vidéo.

11. Dispositif client selon la revendication 10, comprenant en outre un port de réseau bidirectionnel (134, 212-220, 822-828) configuré pour recevoir l'horaire d'événements actualisé en réponse à une demande de cet horaire d'événements qui est émise sur le port de réseau bidirectionnel par l'application de transmission.

12. Dispositif client selon la revendication 10 ou 11, dans lequel l'application d'enregistrement est configurée en outre pour :
recevoir ladite pluralité desdites demandes d'enregistrement de ladite pluralité desdites émissions vidéo, chacune desdites données d'émission vidéo comprenant en outre ledit indicateur d'écart potentiel par rapport à l'horaire d'événements, dans lequel ledit indicateur est un indicateur d'écart potentiel par rapport à l'heure de début et à la durée dans le guide électronique des programmes ; et
déterminer, à partir du guide électronique des programmes et desdits indicateurs respectifs d'écart potentiel, si un chevauchement existe pour l'une quelconque desdites émissions vidéo chronologiquement adjacentes.

13. Dispositif client selon la revendication 12, dans lequel l'application d'enregistrement est en outre configurée pour exclure, dans l'une dite quelconque desdites émissions vidéo chronologiquement adjacentes où ledit chevauchement existe, l'émission vidéo choisie dans le groupe constitué des émissions suivantes :
la dernière dite émission vidéo dans l'ordre chronologique ;
la première dite émission vidéo dans l'ordre chronologique ; et
les deux dites émissions vidéo chronologiquement adjacentes.

14. Dispositif client selon la revendication 12 ou 13 comprenant en outre un mécanisme d'émission de diagnostic, dans lequel l'application d'enregistrement est en outre configurée, en réponse à la détermination de l'existence de l'une quelconque desdites émissions vidéo chronologiquement adjacentes qui se chevauchent, pour émettre (308) un diagnostic sur le mécanisme d'émission de diagnostic.

15. Dispositif client selon l'une quelconque des revendications 12 à 14, dans lequel l'application d'enregistrement est en outre configurée, en réponse à la détermination de l'existence de l'une dite quelconque desdites émissions vidéo chronologiquement adjacentes qui se chevauchent, pour recevoir une instruction permettant d'éliminer l'événement d'émission vidéo correspondant à la demande d'enregistrement de l'émission vidéo qui correspond à une dite émission vidéo desdites émissions vidéo chronologiquement adjacentes qui se chevauchent.

16. Dispositif client selon l'une quelconque des revendications 1 à 15 constitué d'un appareil magnétoscope, dans lequel le programme d'application est conçu pour demander et recevoir ledit horaire d'événements actualisé correspondant à une ou plusieurs dites émissions vidéo sur lesdites adresses d'émission d'un réseau de télédiffusion (110) ; et
dans lequel le magnétoscope est conçu pour enregistrer, conformément à l'horaire d'événements actualisé, une ou plusieurs dites émissions vidéo reçues à partir desdites adresses d'émission du réseau de télédiffusion.

17. Dispositif client selon l'une quelconque des revendications 1 à 16 constitué d'un appareil magnétoscope, dans lequel la mémoire est conçue pour stocker lesdits événements d'émission vidéo comprenant chacun, respectivement, ledit horaire d'événements et ladite adresse d'émission ; et
dans lequel le magnétoscope est conçu pour enregistrer, conformément à l'horaire d'événements actualisé, ladite ou lesdites une ou plusieurs émissions vidéo reçues à partir desdites adresses d'émission.

18. Dispositif client selon la revendication 17, dans lequel la mémoire comprend :
un moyen permettant de recevoir ladite pluralité d'événements d'émission vidéo comprenant chacun, respectivement :
ledit horaire d'événements ;
ladite adresse d'émission ; et
ledit indicateur d'écart potentiel par rapport à l'horaire d'événements.

19. Dispositif client selon la revendication 18 comprenant en outre un moyen d'émission (308) d'un diagnostic en réponse à ladite identification d'un dit conflit entre lesdits événements d'émission vidéo chronologiquement adjacents.

20. Dispositif client selon la revendication 18 ou 19, dans lequel la mémoire stocke un dit événement d'émission vidéo respectif pour chacune desdites demandes d'enregistrement d'une dite émission vidéo correspondant à un dit événement d'émission.

21. Dispositif client selon la revendication 19, comprenant en outre un moyen de réception d'une instruction permettant d'éliminer un dit événement d'émission vidéo en conflit dans ladite mémoire, où ledit événement d'émission vidéo en conflit correspond audit un conflit entre lesdits événements d'émission vidéo chronologiquement adjacents.

22. Dispositif client selon l'une quelconque des revendications 17 à 21, dans lequel :
l'horaire d'événements et l'horaire d'événements actualisé comprennent tous deux une heure de début (126) et une durée ; et
le programme d'application reçoit automatiquement l'horaire d'événements actualisé à un ou plusieurs moments choisis dans le groupe constitué des moments suivants :
préalablement à l'heure de début de l'horaire d'événements ;
à l'heure de début de l'horaire d'événements ;
préalablement à l'heure de début de l'horaire d'événements plus la durée de l'horaire d'événements ;
à l'heure de début de l'horaire d'événements plus la durée de l'horaire d'événements ;
préalablement à l'heure de début de l'horaire d'événements actualisé ;
à l'heure de début de l'horaire d'événements actualisé ;
préalablement à l'heure de début de l'horaire d'événements actualisé plus la durée de l'horaire d'événements actualisé ; et
à l'heure de début de l'horaire d'événements actualisé plus la durée de l'horaire d'événements actualisé.

23. Système (100) comprenant :
un réseau de télédiffusion (110) permettant d'émettre sur une pluralité de canaux ;
un réseau interconnecté comportant une pluralité d'adresses de réseau ;
un moyen (152), situé à une première dite adresse de réseau sur le réseau interconnecté, permettant de stocker des horaires d'événements actualisés comprenant chacun un dit canal, une heure de début (126) et une durée correspondant à un événement d'émission vidéo sur le réseau de télédiffusion, et comprenant :
un moyen permettant de recevoir lesdits horaires d'événements actualisés ;
un moyen permettant de recevoir une demande pour un dit horaire d'événements actualisé à partir d'une seconde dite adresse de réseau ; et
un moyen permettant de transmettre vers la seconde dite adresse de réseau, en réponse à la demande, ledit horaire d'événements actualisé ;
le dispositif client selon l'une quelconque des revendications 1 à 22, sur la seconde dite adresse de réseau, permettant d'enregistrer ladite ou desdites une ou plusieurs émissions vidéo, dans lequel :
le programme d'application est conçu pour créer et transmettre vers la première dite adresse de réseau la demande d'un dit horaire d'événements actualisé et pour recevoir le un dit horaire d'événements actualisé ; et
le magnétoscope est conçu pour enregistrer, conformément audit horaire d'événements actualisé, ladite ou lesdites une ou plusieurs émissions vidéo reçues du réseau de télédiffusion.

24. Système selon la revendication 23, dans lequel :
le magnétoscope comprend un moyen permettant de stocker lesdits horaires d'événements comprenant chacun un dit canal, une heure de début (126) et une durée correspondant à un événement d'émission vidéo sur le réseau de télédiffusion ; et
le programme d'application effectue ladite création et transmission à un ou plusieurs moments choisis dans le groupe constitué des moments suivants :
préalablement à l'heure de début de chacun desdits horaires d'événements ;
à l'heure de début de chacun desdits horaires d'événements ;
préalablement à l'heure de début plus la durée de chacun desdits horaires d'événements ;
à l'heure de début plus la durée de chacun desdits horaires d'événements ;
préalablement à l'heure de début de chacun desdits horaires d'événements actualisés ;
à l'heure de début de chacun desdits horaires d'événements actualisés ;
préalablement à l'heure de début plus la durée de chacun desdits horaires d'événements actualisés ; et
à l'heure de début plus la durée de chacun desdits horaires d'événements actualisés.

25. Système selon la revendication 23 ou 24 constitué d'un système d'émission de télévision, dans lequel ledit réseau de télédiffusion est un réseau d'émission de télévision permettant de diffuser des signaux vidéo sur ladite pluralité de canaux ;
dans lequel ledit moyen, à la première dite adresse de réseau, permet de stocker ledit horaire d'événements actualisé, comprend en outre :
une base de données (152) mémorisant lesdits horaires d'événements actualisés ;
une interface permettant d'actualiser les horaires d'événements actualisés dans la base de données ;
un module de service de programmation d'événements permettant les opérations suivantes :
recevoir ladite demande d'un dit horaire d'événements actualisé à partir de ladite seconde adresse de réseau ; et
transmettre sur ladite seconde adresse de réseau, en réponse à la demande, ledit horaire d'événements actualisé ; et
dans lequel ledit dispositif client, à ladite seconde adresse de réseau, comprend en outre :
un module de demande de programmation d'événements permettant de réaliser les opérations suivantes :
créer et transmettre à ladite première adresse de réseau la demande d'un dit horaire d'événements actualisé ; et
recevoir le un dit horaire d'événements actualisé.

26. Procédé de mise en oeuvre d'un dispositif client (108, 108(1)-108(N)), comprenant l'exécution d'un programme d'application présent dans une mémoire du dispositif client sur un processeur du dispositif client, comprenant les opérations consistant à :
recevoir (302), pour stockage dans la mémoire, un guide des programmes comportant une pluralité d'événements d'émission vidéo comprenant chacun, respectivement :
un horaire d'événements ; et
une adresse d'émission ;
recevoir (304) une pluralité de demandes d'enregistrement d'une pluralité desdites émissions vidéo correspondant à une pluralité respective desdits événements d'émission vidéo ;
demander et recevoir (504, 512) un horaire d'événements actualisé correspondant à chacun desdits événements d'émission vidéo ;
dériver un indicateur d'écart potentiel par rapport à l'horaire d'événements pour chacun desdits enregistrements demandés d'une dite émission vidéo ; et
identifier (306), en utilisant lesdits indicateurs respectifs d'écart potentiel par rapport à l'horaire d'événements, des conflits entre lesdits événements d'émission vidéo chronologiquement adjacents ; et
dans lequel le procédé comprend en outre la mise en oeuvre d'un magnétoscope du dispositif client pour enregistrer (520) une ou plusieurs émissions vidéo à partir desdits canaux d'émission correspondants conformément à l'horaire d'événements actualisé.

27. Procédé selon la revendication 26, dans lequel ladite demande et réception dudit horaire d'événements actualisé comprend la demande et la réception dudit horaire d'événements actualisé correspondant à chacune desdites émissions vidéo sur une adresse d'émission d'un réseau de télédiffusion (110) ; et
dans lequel ledit enregistrement de ladite ou desdites une ou plusieurs émissions vidéo comprend l'enregistrement, conformément à l'horaire d'événements actualisé, de l'émission vidéo reçue à partir de l'adresse d'émission du réseau de télédiffusion.

28. Procédé selon la revendication 27, dans lequel chacun des événements de ladite pluralité d'événements d'émission vidéo comprend en outre un indicateur d'écart potentiel par rapport à l'horaire d'événements ; et
dans lequel le procédé comprend en outre l'identification, en utilisant lesdits indicateurs respectifs d'écart potentiel par rapport à l'horaire d'événements, des conflits entre lesdits événements d'émission vidéo chronologiquement adjacents.

29. Procédé selon la revendication 28, comprenant en outre l'émission (308) d'un diagnostic en réponse à ladite identification d'un dit conflit entre lesdits événements d'émission vidéo chronologiquement adjacents.

30. Procédé selon la revendication 28 ou 29, comprenant en outre le stockage d'un dit événement d'émission vidéo respectif pour chacune desdites demandes d'enregistrement d'une dite émission vidéo correspondant à un dit événement d'émission.

31. Procédé selon la revendication 30, comprenant en outre l'élimination d'un dit événement d'émission vidéo en conflit qui correspond audit un dit conflit entre lesdits événements d'émission vidéo chronologiquement adjacents.

32. Procédé selon l'une quelconque des revendications 27 à 31, comprenant en outre la demande de l'horaire d'événements actualisé préalablement à la réception de l'horaire d'événements actualisé.

33. Procédé selon l'une quelconque des revendications 27 à 32, dans lequel :
l'horaire d'événements et l'horaire d'événements actualisé comprennent tous deux une heure de début (126) et une durée ; et
la demande et la réception d'un horaire d'événements actualisé correspondant à une émission vidéo sur une adresse d'émission d'un réseau de télédiffusion reçoivent automatiquement l'horaire d'événements actualisé à un ou plusieurs moments choisis dans le groupe constitué des moments suivants :
préalablement à l'heure de début de l'horaire d'événements ;
à l'heure de début de l'horaire d'événements ;
préalablement à l'heure de début de l'horaire d'événements plus la durée de l'horaire d'événements ;
à l'heure de début de l'horaire d'événements plus la durée de l'horaire d'événements ;
préalablement à l'heure de début de l'horaire d'événements actualisé ;
à l'heure de début de l'horaire d'événements actualisé ;
préalablement à l'heure de début de l'horaire d'événements actualisé plus la durée de l'horaire d'événements actualisé ; et
à l'heure de début de l'horaire d'événements actualisé plus la durée de l'horaire d'événements actualisé.

34. Procédé selon l'une quelconque des revendications 26 à 33, conçu pour mettre en oeuvre un boîtier décodeur dudit dispositif client, le boîtier décodeur recevant un contenu de programmation comprenant l'une des émissions de ladite pluralité d'émissions vidéo dans lequel ladite émission vidéo est décrite par des données de guide (120), dans lequel ladite émission vidéo doit être enregistrée par le boîtier décodeur, dans lequel le procédé est en outre conçu pour effectuer l'enregistrement de ladite émission vidéo dans son intégralité, et dans lequel le procédé comprend en outre les opérations consistant à :
demander et recevoir ledit événement actualisé sur un réseau bidirectionnel (110) pour actualiser les informations d'horaire (126, 128) incluses dans les données de guide, dans lequel ledit horaire d'événements actualisé comprend une heure de début effective (126) de ladite émission vidéo et une heure de fin effective (128) de ladite émission vidéo ;
commencer un enregistrement (520) de ladite émission vidéo au cours d'un premier intervalle temporel prédéterminé de l'heure de début effective comme indiqué dans les informations d'horaire ; et
mettre fin à l'enregistrement de ladite émission vidéo au cours d'un second intervalle temporel prédéterminé de l'heure de fin effective de ladite émission vidéo comme indiqué dans ledit horaire d'événements actualisé.

35. Procédé selon la revendication 34, dans lequel ledit horaire d'événements actualisé est demandé et reçu pendant l'enregistrement de ladite émission vidéo.

36. Procédé selon la revendication 34 ou 35, comprenant en outre l'accord du contenu de programmation sur l'émission vidéo à enregistrer, dans lequel les informations d'horaires comprises dans les données de guide reçues par le boîtier décodeur dans le contenu de programmation comprennent une heure de début désignée (126) et une heure de fin désignée (128) pour ladite émission vidéo.

37. Procédé selon l'une quelconque des revendications 34 à 36, comprenant en outre la sélection de ladite émission vidéo par un spectateur.

38. Procédé selon la revendication 37, dans lequel la sélection de ladite émission vidéo par le spectateur comprend en outre l'affichage de données de guide comprenant ladite émission vidéo pour le spectateur.

39. Procédé selon la revendication 37 ou 38, dans lequel la sélection de ladite émission vidéo comprend en outre l'affichage des données de guide pour le spectateur sur un dispositif d'affichage (136, 136(1), 136(2), 138).

40. Procédé selon l'une quelconque des revendications 34 à 39, dans lequel la demande et la réception dudit horaire d'événements actualisé sur ledit réseau bidirectionnel pour actualiser lesdites informations d'horaires incluses dans les données de guide comprennent en outre :
la demande et la réception, sur le réseau bidirectionnel, dudit horaire d'événements actualisé avant une heure de début prévue (126) de ladite émission vidéo incluse dans les données de guide reçues par le boîtier décodeur qui reçoit le contenu de programmation.

41. Procédé selon l'une quelconque des revendications 34 à 40, dans lequel la demande et la réception dudit horaire d'événements actualisé sur ledit réseau bidirectionnel pour actualiser lesdites informations d'horaires incluses dans les données de guide comprennent en outre l'opération consistant à :
assurer que ladite émission vidéo enregistrée par le boîtier décodeur est la même émission vidéo que celle sélectionnée par un spectateur pour être enregistrée.

42. Procédé selon l'une quelconque des revendications 34 à 41, dans lequel la demande et la réception dudit horaire d'événements actualisé sur ledit réseau bidirectionnel pour actualiser lesdites informations d'horaires incluses dans les données de guide comprennent en outre les opérations consistant à :
demander et recevoir ledit horaire d'événements actualisé sur le réseau bidirectionnel pour actualiser lesdites informations d'horaires, avant une heure de fin prévue (128) de ladite émission vidéo, incluses dans les données de guide reçues par le boîtier décodeur qui reçoit le contenu de programmation.

43. Procédé selon l'une quelconque des revendications 34 à 42, comprenant en outre la suspension de l'enregistrement lorsque ladite émission vidéo est interrompue conformément à la détermination provenant dudit horaire d'événements actualisé reçu par le boîtier décodeur, dans lequel l'enregistrement se poursuit après l'interruption jusqu'à ce que l'heure de fin effective de ladite émission vidéo soit atteinte.

44. Procédé selon l'une quelconque des revendications 34 à 43, dans lequel ledit horaire d'événements actualisé comprend :
des informations d'émission vidéo identifiant une émission vidéo en cours d'émission ; et
des indices indiquant que ladite émission vidéo qui doit être enregistrée n'est plus en cours d'émission.

45. Procédé selon l'une quelconque des revendications 34 à 44, comprenant en outre l'extension d'une longueur de l'enregistrement jusqu'à ce que l'heure de fin effective de ladite émission vidéo indiquée dans ledit horaire d'événements actualisé soit atteinte.

46. Procédé selon l'une quelconque des revendications 34 à 45, dans lequel l'enregistrement est stocké sur un support de stockage du boîtier décodeur.

47. Procédé selon l'une quelconque des revendications 26 à 46, comprenant en outre les opérations consistant à :
stocker, à une première adresse d'une pluralité d'adresses de réseau d'un réseau interconnecté (110), lesdits horaires d'événements actualisés comprenant chacun un dit canal, une heure de début (126) et une durée correspondant à l'un des événements de ladite pluralité d'événements d'émission sur un canal d'un réseau de télédiffusion (110) ;
recevoir lesdits horaires d'événements actualisés à ladite première dite adresse de réseau ;
recevoir, à ladite première dite adresse de réseau depuis ledit dispositif client à une seconde dite adresse de réseau, une demande pour un dit horaire d'événements actualisé ; et
transmettre à la seconde dite adresse de réseau, en réponse à la demande, ledit horaire d'événements actualisé ; et
dans lequel ledit enregistrement, à la seconde dite adresse de réseau, de ladite ou desdites une ou plusieurs émissions vidéo comprend les opérations consistant à :
créer et émettre la demande d'un dit horaire d'événements actualisé à la première dite adresse de réseau ;
recevoir ledit horaire d'événements actualisé ; et
enregistrer, conformément à un dit horaire d'événements actualisé, ladite ou lesdites une ou plusieurs émissions vidéo reçues du réseau de télédiffusion.

48. Procédé selon la revendication 47, dans lequel :
l'enregistrement de l'émission vidéo comprend le stockage desdits horaires d'événements comprenant chacun un dit canal, une heure de début (126) et une durée correspondant à un événement d'émission vidéo sur le réseau de télédiffusion ; et
la création et la transmission de la demande pour un dit horaire d'événements actualisé à la première dite adresse de réseau sont mises en oeuvre à un ou plusieurs moments choisis dans le groupe constitué des moments suivants :
préalablement à l'heure de début de chacun desdits horaires d'événements ;
à l'heure de début de chacun desdits horaires d'événements ;
préalablement à l'heure de début plus la durée de chacun desdits horaires d'événements ;
à l'heure de début plus la durée de chacun desdits horaires d'événements ;
préalablement à l'heure de début de chacun desdits horaires d'événements actualisés ;
à l'heure de début de chacun desdits horaires d'événements actualisés ;
préalablement à l'heure de début plus la durée de chacun desdits horaires d'événements actualisés ; et
à l'heure de début plus la durée de chacun desdits horaires d'événements actualisés.

49. Un ou plusieurs supports lisibles par un ordinateur (806-812) comprenant des instructions exécutables par un ordinateur qui, lorsqu'elles sont exécutées, commandent un dispositif client (108, 108(1)-108(N)) pour effectuer les opérations suivantes :
recevoir une demande d'un spectateur pour enregistrer une pluralité de programmes ;
générer un tableau enregistré qui désigne, pour chacun desdits programmes, une durée, une heure de début (126), une date d'émission (124) et un canal d'émission ; et
pour chacun desdits programmes du tableau d'enregistrement, les opérations consistant à :
transmettre une première demande, préalablement à l'heure de début à la date d'émission, pour effectuer une actualisation de la date d'émission, de la durée et de l'heure de début ;
recevoir, en réponse à la première demande, une première actualisation quelconque de la date d'émission, de la durée et de l'heure de début ;
dériver un indicateur d'écart potentiel par rapport à l'horaire d'événements pour chacun desdits enregistrements demandés d'une dite émission vidéo ;
identifier (306), en utilisant lesdits indicateurs respectifs d'écart potentiel par rapport à l'horaire d'événements, des conflits entre lesdits événements d'émission vidéo chronologiquement adjacents ; et
mettre en oeuvre un magnétoscope sur le dispositif client pour enregistrer (520) une ou plusieurs émissions vidéo depuis lesdits canaux d'émission correspondants conformément à l'horaire d'événements actualisé.

50. Un ou plusieurs supports lisibles par ordinateur selon la revendication 49, comprenant en outre des instructions exécutables par ordinateur qui, lorsqu'elles sont exécutées, commandent le dispositif client pour effectuer les opérations suivantes :
pour chacun desdits programmes du tableau d'enregistrement :
transmettre une seconde demande, à l'heure de début à la date d'émission, pour une seconde actualisation de la date d'émission, de la durée et de l'heure de début ;
recevoir, en réponse à la seconde demande, une dite seconde actualisation quelconque de la date d'émission, de la durée et de l'heure de début ; et
réinitialiser la date d'émission, la durée et l'heure de début conformément à une dite seconde actualisation quelconque reçue.

51. Un ou plusieurs supports lisibles par ordinateur selon la revendication 50, comprenant en outre des instructions exécutables par ordinateur qui, lorsqu'elles sont exécutées, commandent le dispositif client, pour chacun desdits programmes du tableau d'enregistrement, pour enregistrer une émission vidéo à partir de l'heure de début pour la durée à la date d'émission sur le canal d'émission.

52. Un ou plusieurs supports lisibles par ordinateur selon l'une quelconque des revendications 49 à 51, comprenant en outre des instructions exécutables par ordinateur qui, lorsqu'elles sont exécutées, commandent un système informatique (100, 108, 108(1)-108(N)) pour mettre en oeuvre le procédé conforme à l'une quelconque des revendications 26 à 48.
